# EUROPEAN PATENT APPLICATION

(11) **EP 4 679 884 A1**
(43) Date of publication of application: **14.01.2026**
(21) Application number: 24769748.5
(22) Date of filing: 28.02.2024
(51) Int. Cl.: H04W 28/06

(54) **INFORMATION SENDING METHOD AND APPARATUS, AND DEVICE, AND STORAGE MEDIUM**

(30) Priority: 10.03.2023 CN 202310235276
(71) Applicant: Guangdong OPPO Mobile Telecommunications Corp., Ltd., Wusha, Chang'an, Dongguan 523860 (CN)
(72) Inventor: ZHOU, Pei, Dongguan, Guangdong 523860 (CN); LI, Yapu, Dongguan, Guangdong 523860 (CN); LU, Liuming, Dongguan, Guangdong 523860 (CN); GAO, Ning, Dongguan, Guangdong 523860 (CN)
(74) Representative: Novagraaf Technologies
(86) International application number: PCT/CN2024/079119
(87) International publication number: WO 2024/188054

(57) **Abstract**

The present application relates to the communication field, and in particular, to an information sending method and apparatus, a device, and a storage medium. The method comprises: sending a first frame, wherein the first frame is used for triggering TXOP sharing.

## Description

The present disclosure claims priority to the patent application No. 202310235276.7, filed on March 10, 2023, and entitled "INFORMATION TRANSMITTING METHOD AND APPARATUS, AND DEVICE, AND STORAGE MEDIUM," the entire content of which is incorporated herein by reference.

### TECHNICAL FIELD

The present disclosure relates to the field of communications, and in particular, to a method and apparatus for transmitting information, a device, and a storage medium.

### RELATED ART

In the context of sharing a transmission opportunity (TXOP) among wireless devices, the problem of how to indicate or determining a shared party (recipient device) remains unsolved.

### SUMMARY

Embodiments of the present disclosure provide a method and apparatus for transmitting information, a device, and a storage medium. The technical solutions are as follows:

According to an aspect of the present disclosure, a method for transmitting information is provided. The method is performed by a first wireless device, and includes: transmitting a first frame, wherein the first frame is configured to trigger TXOP sharing.

According to an aspect of the present disclosure, a method for transmitting information is provided. The method is performed by a second wireless device, and includes: receiving a first frame, wherein the first frame is configured to trigger TXOP sharing.

According to an aspect of the present disclosure, a method for transmitting information is provided. The method is performed by a first wireless device, and includes: determining an access point (AP) identity (ID) of a second wireless device.

According to an aspect of the present disclosure, a method for transmitting information is provided. The method is performed by a second wireless device, and includes: determining an AP ID of the second wireless device.

According to an aspect of the present disclosure, a method for transmitting information is provided. The method is performed by a first wireless device, and includes: determining a time-frequency resource corresponding to a second wireless device.

According to an aspect of the present disclosure, a method for transmitting information is provided. The method is performed by a second wireless device, and includes: determining a time-frequency resource corresponding to the second wireless device.

According to an aspect of the present disclosure, an apparatus for transmitting information is provided. The apparatus includes: a first transmitting module, configured to transmit a first frame, wherein the first frame is configured to trigger TXOP sharing.

According to an aspect of the present disclosure, an apparatus for transmitting information is provided. The apparatus includes: a first receiving module, configured to receive a first frame, wherein the first frame is configured to trigger TXOP sharing.

According to an aspect of the present disclosure, an apparatus for transmitting information is provided. The apparatus includes: a first processing module, configured to determine an AP ID of a second wireless device.

According to an aspect of the present disclosure, an apparatus for transmitting information is provided. The apparatus includes: a second processing module, configured to determine an AP ID of a second wireless device.

According to an aspect of the present disclosure, an apparatus for transmitting information is provided. The apparatus includes: a third processing module, configured to determine a time-frequency resource corresponding to a second wireless device.

According to an aspect of the present disclosure, an apparatus for transmitting information is provided. The apparatus includes: a fourth processing module, configured to determine a time-frequency resource corresponding to a second wireless device.

According to an aspect of the present disclosure, a communication device is provided. The communication device includes: a processor, a transceiver communicably connected to the processor, and a memory configured to store one or more instructions executable by the processor. The processor is configured to load and execute the one or more instructions to perform the method for transmitting information as described in the above aspects.

According to an aspect of the present disclosure, a computer-readable storage medium is provided. The computer-readable storage medium stores one or more executable instruction therein. The one or more executable instructions, when loaded and executed by a processor, cause the processor to perform the method for transmitting information as described in the above aspects.

According to an aspect of the present disclosure, a computer program product is provided. The computer program product includes one or more computer instructions stored in a computer-readable storage medium. The one or more computer instructions, when read from the computer-readable storage medium and executed by a processor of a computer device, cause the computer device to perform the method for transmitting information as described in the above aspects.

According to an aspect of the present disclosure, a chip is provided. The chip includes programmable logic circuitry and/or one or more program instructions. The chip, when running, is configured to perform the method for transmitting information as described in the above aspects.

According to an aspect of the present disclosure, a computer program is provided. The computer program includes one or more computer instructions. The one or more computer instructions, when loaded executed by a processor of a computer device, cause the computer device to perform the method for transmitting information as described in the above aspects.

### BRIEF DESCRIPTION OF DRAWINGS

For clearer descriptions of the technical solutions in the embodiments of the present disclosure, the drawings required for describing the embodiments are briefly introduced hereinafter. Obviously, the drawings in the following description are only some of the embodiments of the present disclosure, and those of ordinary skill in the art may derive other drawings based on these drawings without any creative efforts.
FIG. 1 is a schematic diagram of a communication system according to some exemplary embodiments of the present disclosure;
FIG. 2 is a schematic diagram of a frame format according to some exemplary embodiments of the present disclosure;
FIG. 3 is a schematic diagram of a frame format according to some exemplary embodiments of the present disclosure;
FIG. 4 is a schematic diagram of a frame format according to some exemplary embodiments of the present disclosure;
FIG. 5 is a schematic diagram of a frame format according to some exemplary embodiments of the present disclosure;
FIG. 6 is a schematic diagram of a frame format according to some exemplary embodiments of the present disclosure;
FIG. 7 is a schematic diagram of a communication scenario according to some exemplary embodiments of the present disclosure;
FIG. 8 is a schematic diagram of a communication scenario according to some exemplary embodiments of the present disclosure;
FIG. 9 is a schematic flowchart of a method for transmitting information according to some exemplary embodiments of the present disclosure;
FIG. 10 is a schematic diagram of a method for transmitting information according to some exemplary embodiments of the present disclosure;
FIG. 11 is a schematic diagram of a frame format according to some exemplary embodiments of the present disclosure;
FIG. 12 is a schematic diagram of a frame format according to some exemplary embodiments of the present disclosure;
FIG. 13 is a schematic diagram of a method for transmitting information according to some exemplary embodiments of the present disclosure;
FIG. 14 is a schematic diagram of a frame format according to some exemplary embodiments of the present disclosure;
FIG. 15 is a schematic flowchart of a method for transmitting information according to some exemplary embodiments of the present disclosure;
FIG. 16 is a schematic diagram of a communication scenario according to some exemplary embodiments of the present disclosure;
FIG. 17 is a schematic diagram of a method for transmitting information according to some exemplary embodiments of the present disclosure;
FIG. 18 is a schematic diagram of a frame format according to some exemplary embodiments of the present disclosure;
FIG. 19 is a schematic diagram of a frame format according to some exemplary embodiments of the present disclosure;
FIG. 20 is a schematic diagram of a frame format according to some exemplary embodiments of the present disclosure;
FIG. 21 is a schematic diagram of a method for transmitting information according to some exemplary embodiments of the present disclosure;
FIG. 22 is a schematic diagram of a frame format according to some exemplary embodiments of the present disclosure;
FIG. 23 is a schematic diagram of a frame format according to some exemplary embodiments of the present disclosure;
FIG. 24 is a structural block diagram of an apparatus for transmitting information according to some exemplary embodiments of the present disclosure; and
FIG. 25 is a schematic structural diagram of a communication device according to some exemplary embodiments of the present disclosure.

### DETAILED DESCRIPTION

For clearer descriptions of the objectives, technical solutions, and advantages of the present disclosure, the embodiments of the present disclosure are described hereinafter in detail with reference to the drawings. The exemplary embodiments are described in detail herein, and their examples are illustrated in the accompanying drawings. When the following description relates to the accompanying drawings, the same numerals in different drawings represent the like or similar elements, unless otherwise indicated. The embodiments illustrated in the following exemplary embodiments do not represent all the embodiments consistent with the present disclosure. Rather, these embodiments are merely examples of devices and methods that are consistent with some aspects of the present disclosure as detailed in the appended claims.

The terms used in the present disclosure are solely for the purpose of describing specific embodiments and are not intended to limit the present disclosure. The singular forms "a," "an," and "the" used in the present disclosure and the appended claims are also intended to encompass their plural forms, unless the context clearly indicates otherwise. It should also be understood that the term "and/or" as used herein refers to and includes any or all possible combinations of one or more of the associated listed items.

It should be understood that although terms such as "first," "second," and "third" may be used in the present disclosure to describe various information, such information should not be limited by these terms. These terms are only used to distinguish information of the same type from each other. For example, without departing from the scope of the present disclosure, first information may also be referred to as second information, and similarly, second information may also be referred to as first information. The term "if" as used herein may be interpreted as "when," "upon," or "in response to determining" depending on the context.

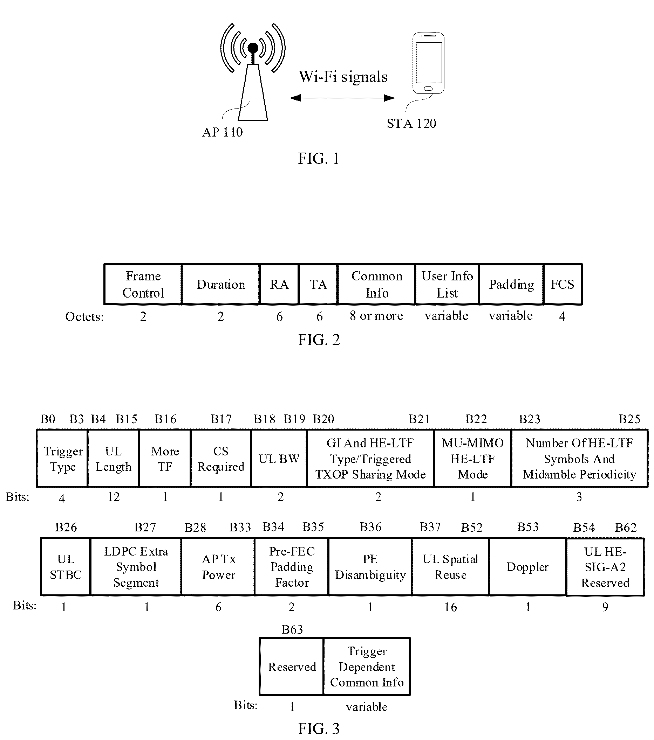

FIG. 1 is a schematic diagram of a wireless fidelity (Wi-Fi) system according to some exemplary embodiments of the present disclosure. The Wi-Fi system includes a group of a terminal device and a terminal device, or a group of a terminal device and a network device, or a group of an AP and a station (STA), which is not limited in the present disclosure. The present disclosure takes the Wi-Fi system including AP 110 and STA 120 as an example for description.

In some scenarios, an AP may also be referred to as an AP STA, which means that an AP is also a type of STA in a sense. In some scenarios, an STA may also be referred to as a non-AP STA.

In some embodiments, an STA may include an AP STA and a non-AP STA.

Communication in the Wi-Fi system may be conducted between an AP and a non-AP STA, between non-AP STAs, or between an STA and a peer STA. Herein, the peer STA may refer to a device on the opposite end of the STA that communicates with the STA. For example, the peer STA may be an AP or a non-AP STA.

The AP acts as a bridge connected between a wired network and a wireless network, and is mainly used to connect wireless network clients and access the wireless network to the Ethernet. An AP device may be a terminal device equipped with a Wi-Fi chip, or a network device equipped with a Wi-Fi chip.

It should be understood that the role of the STA in the communication system is not particularly defined. For example, in some scenarios, in a case where a mobile phone connects to a router, the mobile phone is a non-AP STA; or in a case where the mobile phone serves as a hotspot for other phones, the mobile phone acts as an AP.

The AP and the non-AP STA may be devices applied in the Internet of vehicles (IoV), Internet of things (IoT) nodes, sensors, or other components in the IoT, smart cameras, smart remote controllers, smart water/electricity meters in smart homes, and sensors in smart cities, etc.

In some embodiments, the non-AP STA may support an 802.11be standard. The non-AP STA may also support a plurality of current WLAN standards (such as 802.11ax, 802.11ac, 802.11n, 802.11g, 802.11b, and 802.11a) and future WLAN standards in the 802.11 family. The non-AP STA may also be applied in network environments supporting next-generation WLAN systems. The next-generation WLAN systems are evolved from 802.11ax systems and maintain backward compatibility with the 802.11ax systems. The next-generation Wi-Fi communication refers to any new generation Wi-Fi communication beyond Wi-Fi 7 based on the IEEE 802.11be standard, such as extremely high throughput (EHT) communication, or ultra-high reliability (UHR) communication. For example, the non-AP STA is an EHT STA and/or a UHR STA.

In some embodiments, the AP may be the device that supports the 802.11be standard. The AP may also be the device that supports a plurality of current WLAN standards (such as 802.11ax, 802.11ac, 802.11n, 802.11g, 802.11b, and 802.11a) and future WLAN standards in the 802.11 family. The AP may also be applied in network environments supporting next-generation WLAN systems. The next-generation WLAN systems are evolved from 802.11ax systems and maintain backward compatibility with the 802.11ax systems. The next-generation Wi-Fi communication refers to any new generation Wi-Fi communication beyond Wi-Fi 7 based on the IEEE 802.11 be standard, such as EHT communication, or UHR communication.

In the embodiments of the present disclosure, the STA may include one of the following devices that support the WLAN/Wi-Fi technology: a mobile phone, a tablet computer (e.g., pad), an e-book reader, a laptop, a desktop computer, a TV, a virtual reality (VR) device, an augmented reality (AR) device, a mediated reality (MR) device, an extended reality (XR) device, a baffle reality (BR) device, a cinematic reality (CR) device, a deceive reality (DR) device, a wireless device in industrial control, a set-top box, a wireless device in self-driving, a vehicle communication device, a wireless device in remote medical technology, a wireless device in smart grid, a wireless device in transportation safety, a wireless device in smart city, a wireless device in smart home, a wireless communication chip, an application-specific integrated circuit (ASIC), or a system on chip (SoC), or the like.

The Wi-Fi system in the embodiments of the present disclosure can support frequency bands including but not limited to low-frequency bands (e.g., 2.4 GHz, 5 GHz, or 6 GHz) and high-frequency bands (e.g., 45 GHz or 60 GHz).

One or more links may be present between an STA and an AP.

In some embodiments, the STA and the AP support multi-band communication, such as simultaneous communication in 2.4 GHz, 5 GHz, 6 GHz, as well as 45 GHz, and 60 GHz frequency bands, or simultaneous communication on different channels within the same or different frequency bands, to improve communication throughput and/or reliability between devices. Such devices are typically referred to as multi-band devices or multi-link devices (MLDs), and sometimes referred to as multi-link entities or multi-band entities. An MLD may be an AP device or an STA device. In a case where the MLD is an AP device, the MLD aggregates one or more APs. In a case where the MLD is an STA device, the MLD aggregates one or more non-AP STAs.

An MLD that includes one or more APs is also referred to as an AP. An MLD that includes one or more non-AP STAs is also referred to as a non-AP. In the embodiments of the present disclosure, a non-AP may be referred to as an STA.

In some embodiments, STAs are present in the form of one or more BSSs. A BSS is a collection of STAs that may be successfully synchronized to communicate with each other. A BSS may or may not include an AP.

In some embodiments, an AP entity may include a plurality of affiliated APs, and a non-AP entity may include a plurality of affiliated STAs. A plurality of links may be formed between the affiliated APs in the AP entity and the affiliated STAs in the non-AP entity. Communication may be conducted between the affiliated APs in the AP entity and their corresponding affiliated STAs in the non-AP entity via corresponding links.

In some embodiments, an AP is a device deployed in a WLAN/Wi-Fi system to provide wireless communication functions for STAs. An STA may be a user equipment (UE), an access terminal, a subscriber unit, a subscriber station, a mobile site, a mobile station, a remote station, a remote terminal, a mobile device, a wireless communication device, a user agent, or a user device. The STA may also be a cellular phone, a cordless phone, a session initiation protocol (SIP) phone, a wireless local loop (WLL) station, a personal digital assistant (PDA), a handheld device with wireless communication functions, a computing device, any other processing device connected to a wireless modem, a vehicle-mounted device, or a wearable device, which are not limited in the present disclosure.

In some embodiments, both the AP and the STA may support standards including, but not limited to, the IEEE 802.11 standard.

### 1. Triggered Transmission Opportunity (TXOP) Sharing Mechanism

In the triggered TXOP sharing (abbreviated as "TXS") mechanism, an AP transmits a Multiuser Request-to-Send Triggered TXOP Sharing Trigger frame (abbreviated as "MU-RTS TXS Trigger frame") to an STA. This frame indicates information such as a TXOP sharing mode, time-domain resources for the STA (such as resources indicated by an Allocation Duration subfield) and frequency-domain resources for the STA (such as resources indicated by a Resource Unit (RU) Allocation subfield). In response to receiving the frame, the STA responds to the AP with a Clear-to-Send (CTS) frame, and then the STA uses the time-domain resources and the frequency-domain resources shared by the AP based on the indication of the TXOP sharing mode.

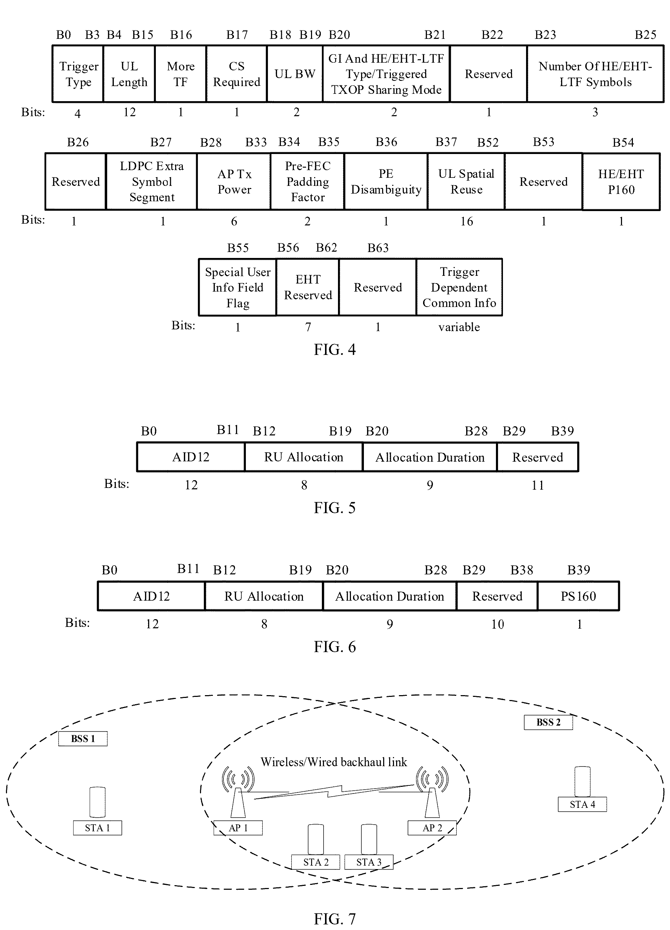

FIG. 2 illustrates a format of a trigger frame, wherein the number below the field indicates the number of octets of the field. In the fields:
- A Common Info field may carry a High Efficiency Variant Common Information field (abbreviated as "HE Variant Common Info field") as illustrated in FIG. 3, or an Extremely High Throughput Variant Common Information field (abbreviated as "EHT Variant Common Info field") as illustrated in FIG. 4. In FIGS. 3 and 4, the number below the field indicates the number of bits of the field.

In a case where a Trigger Type subfield of the HE Variant Common Info field or EHT Variant Common Info field is set to 3, the trigger frame is an MU-RTS Trigger frame. In this case, bits B20 to B21 (that is, the 20^{th} to 21^{st} bits) of the HE Variant Common Info field/EHT Variant Common Info field are used to indicate a Triggered TXOP Sharing Mode subfield. The indication of the Triggered TXOP Sharing Mode subfield is listed in Table 1. In a case where the Triggered TXOP Sharing Mode subfield is not 0, the MU-RTS Trigger frame is called an MU-RTS TXS Trigger frame.

**Table 1 Indication of Triggered TXOP Sharing Mode Subfield**

| Value of Triggered TXOP Sharing Mode subfield | Description |
|---|---|
| 0 | The MU-RTS does not initiate the TXOP sharing mechanism |
| 1 | The MU-RTS initiates the TXOP sharing mechanism, and only the scheduled STA is allowed to transmit frames (MPDU(s)) to its associated AP |
| 2 | The MU-RTS initiates the TXOP sharing mechanism, and the scheduled STA is allowed to transmit frames (MPDU(s)) to its associated AP or to another STA |
| 3 | Reserved |

| | |
|---|---|
| • A User Info List field includes one or more User Info fields. The User Info field may be a High Efficiency Variant User Information field (abbreviated as "HE Variant User Info field") as illustrated in FIG. 5, or carry an Extremely High Throughput Variant User Information field (abbreviated as "EHT Variant User Info field") as illustrated in FIG. 6. In FIGS. 5 and 6, the number below the field indicates the number of bits of the field. | |

In a case where an Association Identifier 12 (abbreviated as "AID12") subfield of the HE Variant User Info field/EHT Variant User Info field is set to be in a range from 1 to 2007, an AID of a scheduled STA is indicated, as specifically listed in Table 2.

**Table 2 Indication Content of AID12 Subfield**

| AID12 subfield | Description |
|---|---|
| 0 | User Info field allocates one or more contiguous RA-RUs to associated STAs |
| 1-2007 | User Info field is addressed to an associated STA whose AID is equal to the value in the AID12 subfield |
| 2008-2044 | Reserved |
| 2045 | User Info field allocates one or more contiguous RA-RUs to unassociated STAs |
| 2046 | Unallocated RU |
| 2047-4094 | Reserved |
| 4095 | Start of Padding field |

An Allocation Duration subfield of the HE Variant User Info field/EHT Variant User Info field indicates time-domain resources shared by the AP to the STA. A Resource Unit Allocation subfield (abbreviated as "RU Allocation subfield") indicates the available frequency-domain resources to the STA within the shared time. A PS160 subfield of the EHT Variant User Info field is used to indicate specific frequency-domain resource allocation in a 320 MHz channel bandwidth.

### 2. Coordinated Time Division Multiple Access (C-TDMA) Scheme Based on Triggered TXOP Sharing

Problem: Existing 802.11 offers limited coordination among APs, which can lead to long latency, low throughput and unfairness.

Objective: To enhance coordination among APs in time to improve the reliability of the network in latency, throughput and fairness [1][2].

Some motions related to AP coordination have already passed in EHT.

UHR should consider them for AP coordination.

Some hooks (e.g., Triggered TXOP Sharing (TXS)) have been introduced in EHT for TXOP sharing.

UHR design should be built on top of the existing hooks.

AP coordination scheme should be kept simple in signaling and architecture.

The scheme should minimize signaling complexity, overhead, and required changes on the APs.

A sharing AP (TXOP Owner) is in range with a shared AP (AP to which part of the TXOP is shared) [3].

No backhaul coordination between APs assumed.

However, backhaul signaling is not prohibited, which may be used to avoid some over-the-air signaling.

Protocol does not assume that two shared APs are in range with each other.

The sharing AP and the shared AP belong to a same AP candidate set [4]; no pre-assigned Master AP or pre-assigned AP groups.

Any AP may become a sharing AP when it wins a TXOP.

A sharing AP and a shared AP may have different primary channels [5][6].

Expect at least one subband is common between sharing and shared APs.

A client of a shared AP may not be in range of the sharing AP.

Flexibility in operating channel configuration.

Same or different operating channel widths, in addition to different primary channels.

Capability in handling uplink traffic from legacy HE/EHT STAs.

Support of HE/EHT/UHR STAs VS support of UHR STAs only.

Simplicity in signaling and architecture.

TXOP allocated to a single shared AP (similar to EHT TXS) VS TXOP allocated to multiple shared APs.

Processing delay at a sharing AP: flexible responding delay (similar to HE/EHT padding) VS fixed/fast responding delay.

Observations.

APs may have different primaries [5][6] and BW in a deployment:

Same bandwidth.

Fully overlap.

Partial overlap (320 MHz only).

Different bandwidths.

One channel is a subset of the other channel.

UHR group needs to consider a C-TDMA protocol that handles APs with different operating channel configurations.

Potential solution:
Use non-HT dup PPDU for control signaling to reach a shared AP, assuming the AP's primary channel is within the operating channel width of the sharing AP.

Observations:
HE/EHT STAs are expected to be around during the rollout of UHR APs.

Many types of latency traffic are bidirectional in nature.

Uplink traffic may be dominant in some use-cases (E.g. stadium).

Problem: if NAV is set by a sharing AP, a HE/EHT STA associated with a shared AP cannot transmit uplink data.

C-TDMA protocol needs to allow uplink traffic from legacy HE/EHT STAs to a shared AP during a TXOP shared to the AP.

Potential solution:
The sharing AP doesn't set the NAV for the whole TXOP in the beginning and set it incrementally instead.

Observations:
TXS can already allocate a TXOP to an associated device.

In UHR, TXS may be expanded to allocate TXOP to a neighboring AP.

The UHR group should try to maximize the reuse of the existing TXS framework to allow a sharing AP to allocate its TXOP to a neighboring AP by some extension of the TXS framework.

Observations:
A TXS Trigger frame allocates TXOP to a single STA (i.e. one User Info field) at a time in EHT.

Even with such simplification, failure recovery and TXOP return are already complex.

Allocation to multiple shared APs is expected to introduce more complexity and signaling overhead when carried in OTA messages.

Recommendation:
For simplicity, the UHR group should allow a mode where TXOP is shared with only one shared-AP.

In addition, the UHR group may study the tradeoff of sharing the TXOP with more than one shared-APs.

Observations:
To handle different responding delays due to different architectures, the non-AP STA may use Trigger Frame MAC Padding Duration (MinTrigProcTime) to buy more processing delay.

Similarly, UHR APs may need different processing delays as well, in order to account not only for the difference in architectures, but also for more complex scheduling decisions and higher workload at an AP (e.g. the processing delay may depend on number of STAs and workload at the AP).

Recommendation:
A sharing AP needs to accommodate the different processing delay requirements of shared APs.

We had a recap on CAP system model from EHT and discussed the following systems requirements for C-TDMA in UHR:
Flexibility in operating channel configuration.

C-TDMA protocol should work with APs that have different operating channel configurations (i.e. different primary channels and bandwidths).

Capability in handling uplink traffic from legacy HE/EHT STAs.

C-TDMA should allow uplink traffic from legacy HE/EHT STAs to a shared AP during a TXOP shared to the AP.

Simplicity in signaling and architecture.

UHR should maximize the reuse of the existing TXS framework.

UHR should allow a mode where TXOP is shared with only one shared-AP. In addition, the group may study the tradeoff of sharing the TXOP with more than one shared-APs.

A sharing AP needs to accommodate the different processing delay requirements of shared APs.

In UHR, TXS may be expanded to allocate a TXOP to a neighboring AP. The UHR group should try to maximize the reuse of the existing TXS framework to allow a sharing AP to allocate its TXOP to a neighboring AP by some extension of the TXS framework.

In other words, the UHR technology may consider performing C-TDMA using the triggered TXOP sharing mechanism. Specifically, an AP that has acquired a TXOP (i.e., a sharing AP) transmits an MU-RTS TXS Trigger frame to its surrounding AP(s) (i.e., shared AP(s)), and the MU-RTS TXS Trigger frame may indicate time-domain resources (i.e., resources indicated by the Allocation Duration subfield) and frequency-domain resources (i.e., resources indicated by the RU Allocation subfield) shared by the sharing AP to the shared AP(s).

However, the TXS mechanism described above only supports an AP sharing the acquired TXOP to an associated STA for use within a basic service set (BSS), and may not support TXOP sharing between APs to achieve C-TDMA.

The C-TDMA scheme based on TXS has at least the following problems.

1) The MU-RTS TXS Trigger frame is a broadcast frame, and a sharing AP may only indicate the target device with which the sharing AP shares the TXOP by the AID12 subfield of the User Info field. However, there is a case where a shared AP does not have an assigned association identifier (AID). Therefore, the MU-RTS TXS Trigger frame transmitted by the sharing AP cannot indicate a specific shared AP, resulting in the failure to implement the C-TDMA scheme based on triggered TXOP sharing mechanism.

2) The channel configurations of the sharing AP and the shared AP(s) may be different. The frequency-domain resources, indicated by the RU Allocation subfield in the User Info field of the MU-RTS TXS Trigger frame transmitted by the sharing AP, may not match the shared AP. As a result, the RUs indicated by the sharing AP, upon the demodulation of the RUs by the shared AP, are not the frequency-domain resources shared by the sharing AP; and consequently, the shared AP does not support or fails to use the RUs indicated by the sharing AP due to channel configuration problems.

In view of the above problems, the present disclosure proposes assigning an AP ID to an AP that performs multi-AP coordination, such that the AID12 subfield in the MU-RTS TXS Trigger frame transmitted by the sharing AP may indicate the AP ID(s) of the specific shared AP.

The present disclosure also proposes an RU conversion method, wherein the sharing AP and the shared AP perform conversion to determine the RU applicable to the shared AP according to their respective channel configurations.

The present disclosure also proposes setting the value of the Triggered TXOP Sharing Mode subfield of the HE Variant Common Info field/EHT Variant Common Info field of the Triggered TXOP Sharing frame to 3, which indicates that the Triggered TXOP Sharing frame is used for sharing resources (i.e., time-domain resources and/or frequency-domain resources) to the AP (i.e., the shared AP). This design is optional and may be combined with the following scheme designs. However, it is not mandatory to combine the design into the following scheme designs.

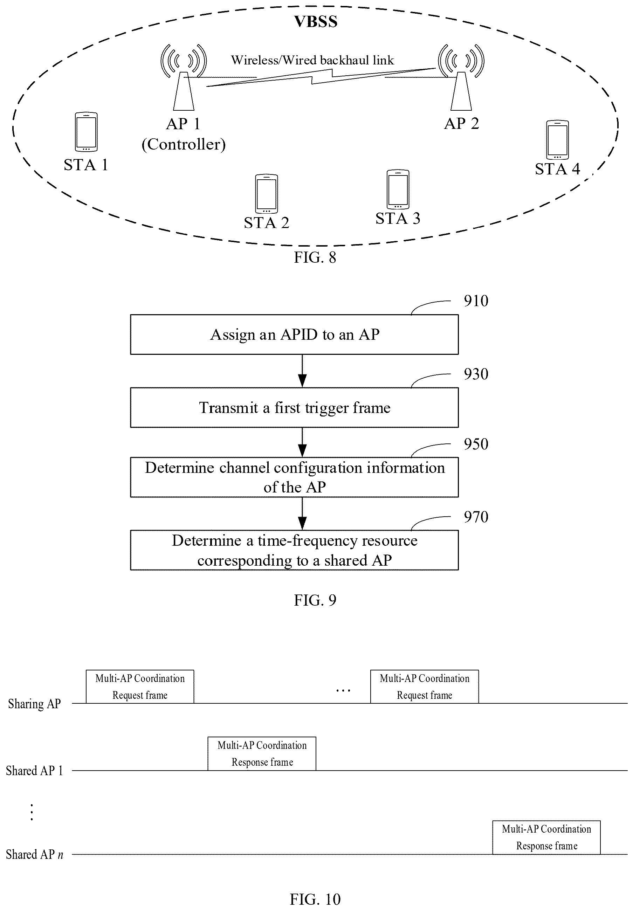

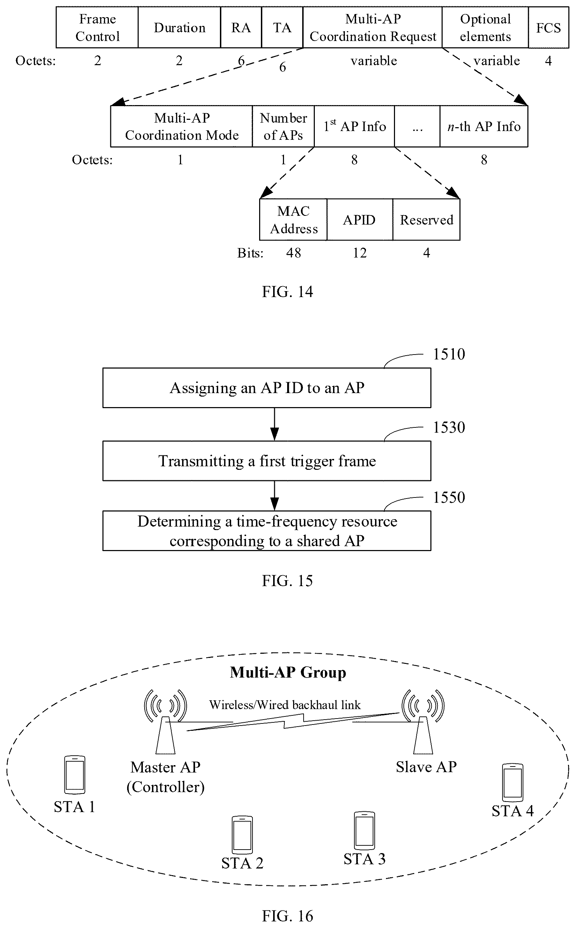

The following describes in detail how the above proposed schemes are designed in combination with different scenarios. Examples include an overlapping basic service set (OBSS) scenario as illustrated in FIG. 7, a virtual BSS (VBSS) scenario where a plurality of APs form a VBSS based on the UHR or UHR evolved technology as illustrated in FIG. 8, or a multi-AP group scenario as illustrated in FIG. 16.

In the present disclosure, the first wireless device includes at least one of: a terminal device, a network device, a controller, an AP, or an STA as illustrated in FIG. 1. The first wireless device includes at least one of: a terminal device, a network device, a controller, an AP, or an STA as illustrated in FIG. 1.

FIG. 9 is a schematic flowchart of a method for transmitting information according to some exemplary embodiments of the present disclosure. In an example where the method is performed by at least one of the terminal device, the network device, the AP, or the STA illustrated in FIG. 1, the method includes at least some of the following steps.

**In step 910,** an AP ID is assigned to an AP.

The AP ID is configured to identify an AP. The same AP may have one or more AP IDs, with one AP ID corresponding to one AP. It should be understood that an AP ID does not imply a limitation on the identification name configured to identify an AP, and that an AP ID may also be referred to as an AP sharing ID, or the like.

The AP ID of a first AP is assigned by a network device; or, the AP ID of the first AP is assigned by a second AP; or, the AP ID of the first AP is assigned by the network device and the second AP.

The network device is the network device illustrated in FIG. 1, or the AP illustrated in FIG. 1, or the STA illustrated in FIG. 1, or a controller in the network.

In some embodiments, the network device assigns AP IDs to all of the APs associated with the network device (or controlled by the network device), respectively, and transmits the respective corresponding AP IDs of all the APs to all the APs.

In some embodiments, the network device assigns AP IDs to a portion of the APs associated with the network device (or controlled by the network device), respectively, and transmits the corresponding AP IDs of this portion of the APs to this portion of the APs; or, the network device assigns AP IDs to a portion of the APs associated with the network device (or controlled by the network device), respectively, and transmits the corresponding AP IDs of this portion of the APs to all of the APs.

In some embodiments, the network device assigns AP IDs to APs via a wired backhaul link and/or a wireless backhaul link.

In some embodiments, the network device assigns AP IDs to APs one by one in sequence, or alternatively the network device assigns AP IDs to APs in parallel.

In some embodiments, a length of the AP ID is a first number of bits (such as 12 bits, 11 bits, or bits in other quantities).

A communication link (including a wired link and/or a wireless link) is present between the second AP and the first AP. In some embodiments, the second AP and the first AP belong to the same BSS, or the second AP and the first AP belong to different BSSs respectively. In some embodiments, the BSS to which the second AP belongs is overlapped with the BSS to which the first AP belongs.

In some embodiments, the first AP includes one or more APs, and the second AP includes one or more APs.

In some embodiments, the second AP shares a TXOP with the first AP. In some embodiments, the second AP acts as a sharing AP for the first AP, and the first AP acts as a shared AP for the second AP.

In some embodiments, the second AP assigns AP IDs to the first APs one by one in sequence, or alternatively the second AP assigns AP IDs to the first APs in parallel.

In some embodiments, the second AP transmits a first frame to the first AP, wherein the first frame carries an AP ID assigned by the second AP to the first AP. The first AP replies to the second AP with a second frame, wherein the second frame is configured to respond to the first frame, for example, to accept, agree to, confirm, reject, or negatively acknowledge the AP ID assigned by the second AP to the first AP.

In some embodiments, the second AP transmits a first frame to the first AP, wherein the first frame is configured to request an AP ID assignment for the first AP. The first AP replies to the second AP with a second frame, wherein the second frame is configured to respond to the first frame, for example, to accept, agree to, confirm, reject, or negatively acknowledge the AP ID assignment by the second AP for the first AP.

In some embodiments, the first frame includes at least one of: a first request frame, a second request frame, a first response frame, a second response frame, a first trigger frame, or a first confirmation frame.

In some embodiments, the second frame includes at least one of: a first request frame, a second request frame, a first response frame, a second response frame, a first trigger frame, or a first confirmation frame.

In some embodiments, the third frame includes at least one of: a first request frame, a second request frame, a first response frame, a second response frame, a first trigger frame, or a first confirmation frame.

In some embodiments, the second AP transmits a first request frame to the first AP, wherein the first request frame carries an AP ID assigned by the second AP to the first AP. The first AP replies to the second AP with a first response frame, wherein the first response frame is configured to respond to the first request frame, for example, to accept, agree to, confirm, reject, or negatively acknowledge the AP ID assigned by the second AP to the first AP.

In some embodiments, the second AP transmits a first request frame to the first AP, wherein the first request frame is configured to request an AP ID assignment for the first AP. The first AP replies to the second AP with a first response frame, wherein the first response frame is configured to respond to the first request frame, for example, to accept, agree to, confirm, reject, or negatively acknowledge the AP ID assignment by the second AP for the first AP.

Exemplarily, in the OBSS scenario illustrated in FIG. 7, APs belong to different BSSs. For example, AP 1 belongs to BSS 1, AP 2 belongs to BSS 2, and AP 1 communicates with the surrounding AP 2 via a wireless/wired backhaul link.

Each AP in the OBSS scenario is assigned with an AP ID, and a length of the AP ID may be a first number of bits (such as 12 bits, 11 bits, or bits in other quantities). Specifically, the AP ID allocation method includes at least the following two types of modes.

**Mode** 1: In a case where a controller exists, the AP IDs are uniformly assigned by the controller.

In a case where a controller is configured in the network, each AP is usually connected to the controller via a wired backhaul link, for example, in an enterprise network, or networks in public places such as large sports stadiums. Therefore, the controller may assign one AP ID to each AP via the wired backhaul link, and transmit the AP IDs corresponding to all of the APs controlled by the controller to all APs in the network, such that any AP in the network controlled by the controller knows the AP IDs of other APs in the same network.

**Mode** 2: In a case where no controller is configured, the sharing AP assigns the AP ID to the shared AP.

Before the sharing AP shares its acquired time-domain resources and/or frequency-domain resources to one or more shared APs by a triggered information transmission method, the sharing AP may transmit a request frame (e.g., a Multi-AP Coordination Request frame) to the shared AP. The request frame carries an AP ID assigned by the sharing AP to the shared AP. Then, the shared AP replies with a response frame (e.g., a Multi-AP Coordination Response frame) indicating acceptance or rejection of the request from the sharing AP.

It should be noted that, in some embodiments, the AP ID is only valid for use between an assigner and an assignee. Other APs, when acting as sharing APs, may not directly use the AP IDs previously assigned to the shared APs to communicate with the shared APs, and need to re-assign AP IDs to the shared APs. In other words, different AP IDs are present between different groups of assigners and assignees. In other words, the AP ID is not generic, but is for a specific assigner and assignee relationship.

FIG. 10 is a schematic diagram of an AP ID allocation method according to some exemplary embodiments of the present disclosure. Description is given hereinafter by using an example where the method is performed in the OBSS scenario illustrated in FIG. 7.

The sharing AP transmits a first request frame to the shared AP1, wherein the first request frame carries an AP ID assigned by the sharing AP to the shared AP1. The shared AP1 replies to the sharing AP with a first response frame, wherein the first response frame is configured to indicate that the shared AP1 accepts the AP ID assigned by the sharing AP to the shared AP1, or to indicate that the shared AP1 rejects the AP ID assigned by the sharing AP to the shared AP1.

The sharing AP transmits a first request frame to the shared AP n, wherein the first request frame carries an AP ID assigned by the sharing AP to the shared AP n. The shared AP n replies to the sharing AP with a first response frame, wherein the first response frame is configured to indicate that the shared AP n accepts the AP ID assigned by the sharing AP to the shared AP n, or to indicate that the shared AP n rejects the AP ID assigned by the sharing AP to the shared AP n.

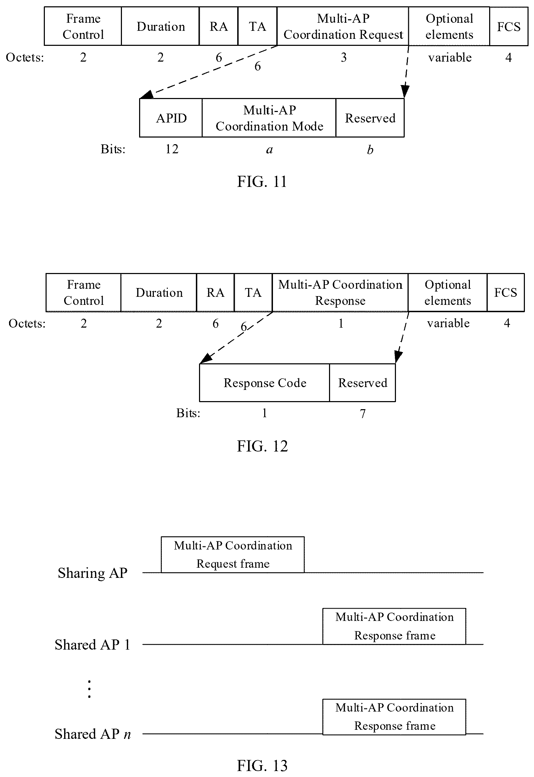

In some embodiments, the first request frame includes a Multi-AP Coordination Request frame. Exemplarily, the format of the Multi-AP Coordination Request frame is illustrated in FIG. 11, wherein the number below the field indicates the number of octets of the field.

The Multi-AP Coordination Request frame carries a Multi-AP Coordination Request element or a Multi-AP Coordination Request field, which includes at least one of: an APID subfield, a Multi-AP Coordination Mode subfield, or reserved bit(s).

A length of the APID subfield is a first number of bits (such as 12 bits, 11 bits, or bits in other quantities). In some embodiments, the APID subfield may have a value range from 2008 to 2044 and/or a value range from 2047 to 4094. In some embodiments, the value range of the APID subfield does not include a range from 0 to 2007, and/or 2045, and/or 2046, and/or 4095.

The Multi-AP Coordination Mode subfield represents the multi-AP coordination mode in which the sharing AP expects, hopes, prepares, or needs to coordinate with the shared AP, and indicates *a* types of multi-AP coordination modes, wherein *a* is an integer greater than or equal to 0. In some embodiments, the multi-AP coordination modes include, but are not limited to, at least one of: C-TDMA, coordinated orthogonal frequency-division multiple access (C-OFDMA), coordinated beamforming (C-BF), joint transmission (J-TX), or coordinated spatial reuse (C-SR), or the like.

In some embodiments, the Multi-AP Coordination Mode subfield indicates *a* types of multi-AP coordination modes in a bitmap format.

A length of the reserved bits in the Multi-AP Coordination Request element or the Multi-AP Coordination Request field is *b* bits. In some embodiments, the sum of the first number of bits, *a,* and *b* is an even number. In some embodiments, the sum of the first number of bits, *a,* and *b* is an integer multiple of 8.

Optional elements carried in the Multi-AP Coordination Request frame may include, but are not limited to, a first element (such as an HT/VHT/HE/EHT/UHR Operation element), which is configured to indicate information such as channel configuration information of the sharing AP.

In some embodiments, the first response frame includes a Multi-AP Coordination Response frame. Exemplarily, the format of the Multi-AP Coordination Response frame is illustrated in FIG. 12, where the number below the field indicates the number of octets of the field.

The Multi-AP Coordination Response frame carries a Multi-AP Coordination Response element/Multi-AP Coordination Response field, wherein a Response Code subfield is configured to indicate whether the shared AP accepts the multi-AP coordination request from the sharing AP. For example, in a case where the Response Code subfield is set to a first value (e.g., 0), the shared AP does not accept the multi-AP coordination request from the sharing AP; or in a case where the Response Code subfield is set to a second value (e.g., 1), the shared AP accepts the multi-AP coordination request from the sharing AP.

Optional elements carried in the Multi-AP Coordination Response frame may include, but are not limited to, a first element which is configured to indicate information such as channel configuration information of the shared AP. Exemplarily, the first element includes at least one of: a High Throughput (HT) Operation element, a Very High Throughput (VHT) Operation element, a High Efficiency (HE) Operation element, an Extremely High Throughput (EHT) Operation element, or a UHR Operation element. In a case where the Response Code subfield indicates that the shared AP does not accept the multi-AP coordination request from the sharing AP, for example, the Response Code subfield is set to 0, the optional element may not exist, that is, the first element is not carried in the Multi-AP Coordination Response frame.

FIG. 13 is a schematic diagram of an AP ID allocation method according to some exemplary embodiments of the present disclosure. Description is given hereinafter by using an example where the method is performed in the OBSS scenario illustrated in FIG. 7.

The sharing AP interacts with the shared APs in a parallel manner, wherein a request frame transmitted by the sharing AP carries AP IDs assigned to a plurality of shared APs.

In some embodiments, the sharing AP transmits the first request frame to the shared AP 1, ..., the shared AP n (n is an integer greater than 1) at the same time. The first request frame carries the AP IDs assigned by the sharing AP to the shared AP 1, ... the shared AP n respectively. The shared AP 1 replies to the sharing AP with a first response frame 1. The first response frame 1 is configured to indicate that the shared AP 1 accepts the AP ID assigned by the sharing AP to the shared AP 1, or to indicate that the shared AP 1 rejects the AP ID assigned by the sharing AP to the shared AP 1. The shared AP n replies to the sharing AP with a first response frame 2. The first response frame 2 is configured to indicate that the shared AP n accepts the AP ID assigned by the sharing AP to the shared AP n, or to indicate that the shared AP n rejects the AP ID assigned by the sharing AP to the shared AP n.

In some embodiments, the first request frame includes a Multi-AP Coordination Request frame. Exemplarily, the format of the Multi-AP Coordination Request frame is illustrated in FIG. 14, wherein the number below the field represents the number of octets or bits of the field.

The Multi-AP Coordination Request frame carries a Multi-AP Coordination Request element or a Multi-AP Coordination Request field, which includes at least one of: a Multi-AP Coordination Mode subfield, a Number of APs subfield, a 1^{st} AP Info subfield, ..., an n^{th} AP Info subfield, or reserved bit(s).

The Multi-AP Coordination Mode subfield represents the multi-AP coordination mode in which the sharing AP expects, hopes, prepares, or needs to coordinate with the shared AP, and indicates *a* types of multi-AP coordination modes, wherein *a* is an integer greater than or equal to 0. In some embodiments, the multi-AP coordination modes include, but are not limited to, at least one of: C-TDMA, C-OFDMA, C-BF, J-TX, or C-SR, or the like.

In some embodiments, the Multi-AP Coordination Mode subfield indicates *a* types of multi-AP coordination modes in a bitmap format, wherein *a* is an integer greater than or equal to 0 and less than or equal to 8.

A length of the reserved bits in the Multi-AP Coordination Request element or the Multi-AP Coordination Request field is (8-*a*) bits.

The Number of APs subfield indicates the number of APs for which information is carried in the Multi-AP Coordination Request frame, that is, the number of APs corresponding to the subfields 1^{st} AP Info to n^{th} AP Info after the Number of APs subfield. Each AP Info field includes a Medium Access Control Address (MAC Address) subfield and an APID subfield, wherein the MAC Address subfield carries a MAC address of a target shared AP, and the APID subfield indicates the AP ID assigned by the sharing AP to the target shared AP. A length of the APID subfield is a first number of bits (such as 12 bits, 11 bits, or bits in other quantities). In some embodiments, a value range of the APID subfield includes a range from 2008 to 2044 and/or a range from 2047 to 4094. In some embodiments, the value range of the APID subfield does not include a range from 0 to 2007, and/or 2045, and/or 2046, and/or 4095. In a case where a shared AP that has received the Multi-AP Coordination Request frame demodulates the MAC Address subfield and the demodulation result indicates that the MAC address carried in the MAC Address subfield is the MAC address of the shared AP itself, it is defaulted or considered that the AP ID assigned in the AP Info field to which the MAC Address subfield belongs is the AP ID assigned to the shared AP. That is, the shared AP that has received the Multi-AP Coordination Request frame determines whether the AP ID carried in the AP Info field is its own AP ID by the MAC address carried in the MAC Address subfield.

Optional elements carried in the Multi-AP Coordination Request frame may include, but are not limited to, a first element (such as an HT/VHT/HE/EHT/UHR Operation element), which is configured to indicate information such as channel configuration information of the sharing AP.

In addition, the Multi-AP Coordination Request frame may be a trigger frame, wherein a Special User Info field in the trigger frame carries the *n* AP Info fields designed in FIG. 14.

In some embodiments, the first response frame includes a Multi-AP Coordination Response frame. Exemplarily, the format of the Multi-AP Coordination Response frame is illustrated in FIG. 12, and the number below the field indicates the number of octets of the field, which may be referred to in the previous description and is not repeated herein.

**In step 930,** a first trigger frame is transmitted
The first trigger frame is configured to trigger TXOP sharing. In some embodiments, the first trigger frame includes at least one of: a TXOP sharing mode, a shared time-domain resource, a shared frequency-domain resource, information of a sharing party, or information of a shared party.

In some embodiments, the first trigger frame indicates a shared AP by an assigned AP ID.

In some embodiments, the first trigger frame includes an MU-RTS TXS Trigger frame. Transmitting the MU-RTS TXS Trigger frame includes transmitting the MU-RTS TXS Trigger frame and/or receiving the MU-RTS TXS Trigger frame.

The MU-RTS TXS Trigger frame includes an AID12 subfield for indicating an AP ID assigned to an AP.

In some embodiments, the MU-RTS TXS trigger frame includes at least one of: a Receiver Address (RA) field, or a User Info field.

In some embodiments, the RA field of the MU-RTS TXS Trigger frame is set to a broadcast address, and the shared AP(s) is or are indicated by the AID12 subfield of the User Info field. The AID12 subfield of the MU-RTS TXS Trigger frame indicates the AP ID of the AP. For example, a value of the AID12 subfield is set to be in a range from 2008 to 2044 and/or a range from 2047 to 4094.

In some embodiments, since the RA field of the MU-RTS TXS Trigger frame transmitted by the sharing AP is set to a broadcast address, the shared AP(s) may only be indicated by the AID12 subfield of the User Info field. As illustrated in Table 2, when AID12 indicates a value in a range from 1 to 2007, the indication represents the AID of the STA. Since step 910 supports assigning an AP ID to each AP, the AID 12 subfield of the MU-RTS TXS Trigger frame transmitted by the sharing AP indicates the AP ID of the AP (e.g., the value of the AID12 subfield is set to be in the range from 2008 to 2044 and/or the range from 2047 to 4094).

In some embodiments, the first trigger frame is different from a MU-RTS TXS Trigger frame. For example, the first trigger frame is an AP TXS Trigger frame. For example, the Trigger Type subfield of the HE variant Common Info field or EHT variant Common Info field is set to one of the values from 8 to 15, representing that the trigger frame is an AP TXS Trigger frame. The RA field of this frame is allowed to be set to a unicast/multicast address. Therefore, the scheme of assigning an AP ID to an AP as described in step 910 is not required, and the sharing AP may transmit an AP TXS Trigger frame to one or more specific shared APs, to share the acquired TXOP and/or frequency resources with the shared AP for use. Other fields of the AP TXS Trigger frame may be consistent with those of the aforementioned MU-RTS TXS Trigger frame.

In some embodiments, the first trigger frame indicates a shared AP by part of bits, all of the bits, or at least one specified bit of the MAC Address field.

**In step 950,** channel configuration information of an AP is determined;
The channel configuration information of each AP (such as a primary channel operated on, or a bandwidth operated on) is carried in a first element. The AP may transmit the channel configuration information to surrounding devices (including APs and/or STAs) by carrying the first element in a management frame, an action frame, or a control frame. The management frame includes at least one of: a Beacon frame, a Probe Response frame, an Association Response frame, or a Reassociation Response frame.

There are at least the following three modes for an AP to determine the channel configuration information of other APs.

In the following modes, the other APs represent APs in the vicinity of the AP except the AP. In some embodiments, the other APs include one AP, or alternatively the other APs include at least two APs.

Mode 1: The AP receives, from other APs, at least one of: a management frame carrying the first element, an action frame carrying the first element, a control frame carrying the first element, or a broadcast probe response frame carrying the first element, to determine the channel configuration information of the other APs, which may be understood as either acquiring or receiving the channel configuration information of the other APs.

Mode 2: The AP transmits a management frame (such as a Beacon Request frame) to an STA, where the management frame is configured to enable the STA to provide the channel configuration information (such as beacon information, which may include the first element) of other APs, to support the AP to determine the channel configuration information of the other APs, which may be understood as either obtaining or receiving the channel configuration information of the other APs.

Mode 3: The AP receives a first request frame carrying the first element and/or a first response frame carrying the first element, to determine the channel configuration information of the other APs, which may be understood as either obtaining or receiving the channel configuration information of the other APs. The first element may be carried in Optional elements. Exemplarily, the first request frame includes the aforementioned Multi-AP Coordination Request frame, and the first response frame includes the aforementioned Multi-AP Coordination Response frame.

**In step 970,** a time-frequency resource corresponding to a shared AP is determined.

Determining the time-frequency resource corresponding to the shared AP may be understood as determining the time-domain resource and/or frequency-domain resource available to the shared AP, or determining the time-domain resource and/or frequency-domain resource required by the shared AP for use.

In some embodiments, the sharing AP determines the time-frequency resource corresponding to the shared AP, or the shared AP determines the time-frequency resource corresponding to the shared AP, or the controller determines the time-frequency resource corresponding to the shared AP, or the master AP determines the time-frequency resource corresponding to the shared AP.

In some embodiments, RU conversion/transformation is performed prior to determining the channel configuration information of the AP; or, RU conversion/transformation is performed upon determining the channel configuration information of the AP; or, RU conversion/transformation is performed both prior to and upon determining the channel configuration information of the AP.

Since the channel configuration information of APs may be different, in the C-TDMA method based on triggered TXOP sharing, the frequency-domain resource, to be shared by the RU Allocation subfield of the sharing AP that transmits the MU-RTS TXS Trigger frame, may be inconsistent with the frequency-domain resource that the shared AP should use. Therefore, the shared AP and/or the sharing AP need to perform RU conversion. For example, in response to receiving the RU allocation indication from the sharing AP, the shared AP performs RU conversion in combination with the first element of the sharing AP. Alternatively, before transmitting the first trigger frame, the sharing AP performs RU conversion in combination with the first element of the shared AP. Performing RU conversion/transformation may be understood as determining the RU that correctly corresponds to oneself, or determining the RU that actually corresponds to oneself, or determining the RU that one should correspond to, or determining the RU that is available to oneself. Specifically, there are at least the following 3 conversion modes.

Mode 1: The first trigger frame (such as the MU-RTS TXS Trigger frame) transmitted by the sharing AP carries, by default, the RU corresponding to the sharing AP itself within the sharable time. In response to receiving the first trigger frame, the shared AP performs RU conversion based on the acquired first element (such as the HT/VHT/HE/EHT/UHR Operation element) of the sharing AP.

Mode 2: The sharing AP performs conversion on the RU corresponding to the sharing AP itself within the sharable time by the received first element (such as the HT/VHT/HE/EHT/UHR Operation element) of the shared AP, and then indicates the converted RU to the shared AP by the first trigger frame (such as the MU-RTS TXS Trigger frame). The sharing AP operates based on the indication of the RU of the first trigger frame;

Mode 3: Indication bits (e.g., an RU Indicator subfield) with a second number of bits (e.g., 1 bit) set in the first trigger frame (e.g., the MU-RTS TXS Trigger frame), are configured to indicate whether the RU indicated by the RU Allocation subfield of the first trigger frame is the RU of the sharing AP (corresponding to the RU conversion in Mode 1) or the RU of the shared AP (corresponding to the RU conversion in Mode 2).

In some embodiments, RU conversion is performed based on at least one of: the RU available to the shared AP, the center frequency of the primary channel of the shared AP, the RU allocated by the sharing AP, or the center frequency of the primary channel of the sharing AP.

In some embodiments, RU conversion is performed based on the frequency offset of the available RU of the shared AP relative to the center frequency of the primary channel of the shared AP.

In some embodiments, the frequency offset of the available RU of the shared AP relative to the center frequency of the primary channel of the shared AP = the center frequency of the primary channel of the sharing AP - the center frequency of the primary channel of the shared AP + the frequency offset of the RU allocated by the sharing AP relative to the center frequency of the primary channel of the sharing AP.

In some embodiments, the shared AP may determine a specific RU index by calculation based on a frequency offset of its available RU relative a center frequency of the primary channel of the shared AP, and hence use the frequency-domain resources allocated by the sharing AP for operation. It should be noted that the (shared) AP may also save an RU mapping table based on the first element (such as the HT/VHT/HE/EHT/UHR Operation element), and upon receiving the first trigger frame from the sharing AP, the shared AP may directly convert the RU in the first trigger frame into an available RU by looking up a table (such as the RU mapping table).

It should be understood that in the embodiments of the application, steps 910, 950, and 970 are optional, and the order of steps 910, 930, 950, and 970 may be exchanged. In addition, any one step, any two steps, or any three steps, among steps 910, 930, 950, and 970, may be implemented as an independent embodiment. For example, step 910 may be implemented as an independent embodiment. Step 930 may be implemented as an independent embodiment. Step 950 may be implemented as an independent embodiment. Step 970 may be implemented as an independent embodiment. A combination of step 910 and step 930 may be implemented as an independent embodiment. A combination of step 930 and step 950 may be implemented as an independent embodiment. A combination of step 930 and step 970 may be implemented as an independent embodiment. A combination of step 910, step 930, and step 950 may be implemented as an independent embodiment. A combination of step 910, step 930, and step 970 may be implemented as an independent embodiment, and so on.

In summary, by assigning an AP ID to the AP that does not overlap with the AID of the STA, a sharing AP is enabled to indicate a specific shared AP by a broadcast first trigger frame (e.g., an MU-RTS TXS Trigger frame), thereby realizing C-TDMA based on the Triggered TXOP Sharing mechanism.

By designing a method for the sharing AP and the shared AP to convert the RU Allocation subfield in the first trigger frame (such as the MU-RTS TXS Trigger frame) transmitted by the sharing AP into frequency-domain resources usable by the shared AP based on their respective first elements (such as HT/VHT/HE/EHT/UHR Operation elements), the problem of possible RU indication mismatch between the sharing AP and the shared AP is solved.

FIG. 15 is a schematic flowchart of a method for transmitting information according to some exemplary embodiments of the present disclosure. In a case where the method is performed by at least one of the terminal device, the network device, the AP, or the STA illustrated in FIG. 1, the method includes at least some of the following steps:

**In step 1510,** an AP ID is assigned to an AP.

The AP ID is configured to identify an AP. The same AP may have one or more AP IDs, with one AP ID corresponding to one AP. It should be understood that an AP ID does not imply a limitation on the identification name configured to identify an AP, and that an AP ID may also be referred to as an AP sharing ID, or the like.

The AP ID of a first AP is assigned by a network device; or, the AP ID of the first AP is assigned by a second AP; or, the AP ID of the first AP is assigned by the network device and the second AP.

The network device is the network device illustrated in FIG. 1, or the AP illustrated in FIG. 1, or the STA illustrated in FIG. 1, or a controller in the network.

In some embodiments, the network device assigns AP IDs to all of the APs associated with the network device (or controlled by the network device), respectively, and transmits the respective corresponding AP IDs of all the APs to all the APs.

In some embodiments, the network device assigns AP IDs to a portion of the APs associated with the network device (or controlled by the network device), respectively, and transmits the corresponding AP IDs of this portion of the APs to this portion of the APs; or, the network device assigns AP IDs to a portion of the APs associated with the network device (or controlled by the network device), respectively, and transmits the corresponding AP IDs of this portion of the APs to all of the APs.

In some embodiments, the network device assigns AP IDs to APs via a wired backhaul link and/or a wireless backhaul link.

In some embodiments, the network device assigns AP IDs to APs one by one in sequence, or alternatively the network device assigns AP IDs to APs in parallel.

In some embodiments, a length of the AP ID is a first number of bits (such as 12 bits, 11 bits, or bits in other quantities).

A communication link (including a wired link and/or a wireless link) is present between the second AP and the first AP. In some embodiments, the second AP and the first AP belong to the same BSS, or the second AP and the first AP belong to different BSSs respectively. In some embodiments, the second AP and the first AP belong to the same VBSS, or the second AP and the first AP belong to the same multi-AP group. A controller is present in the VBSS to which the second AP and the first AP belong. A controller or a master AP is present in the multi-AP group to which the second AP and the first AP belong.

In some embodiments, the first AP includes one or more APs, and the second AP includes one or more APs.

In some embodiments, the second AP shares a TXOP with the first AP. In some embodiments, the second AP acts as a sharing AP for the first AP, and the first AP acts as a shared AP for the second AP.

In some embodiments, the controller assigns AP IDs to the first APs one by one in sequence, or alternatively the controller assigns AP IDs to the first APs in parallel.

In some embodiments, the master AP assigns AP IDs to the first AP one by one in sequence, or alternatively the master AP assigns AP IDs to the first APs in parallel.

In some embodiments, the controller exists independently of all APs, or the controller is hosted on an AP, or the controller is an AP.

In some embodiments, the controller transmits a first frame to the first AP, wherein the first frame carries an AP ID assigned by the controller to the first AP. The first AP replies to the controller with a second frame, wherein the second frame is configured to accept, agree to, confirm, reject, or negatively acknowledge the AP ID assigned by the controller to the first AP.

In some embodiments, the first frame includes at least one of: a first request frame, a second request frame, a first response frame, a second response frame, a first trigger frame, or a first confirmation frame.

In some embodiments, the second frame includes at least one of: a first request frame, a second request frame, a first response frame, a second response frame, a first trigger frame, or a first confirmation frame.

In some embodiments, the third frame includes at least one of: a first request frame, a second request frame, a first response frame, a second response frame, a first trigger frame, or a first confirmation frame.

In some embodiments, the controller transmits a second request frame to the first AP, wherein the second request frame carries an AP ID assigned by the controller to the first AP. The first AP replies to the controller with a second response frame, wherein the second response frame is configured to accept, agree to, confirm, reject, or negatively acknowledge the AP ID assigned by the controller to the first AP.

In some embodiments, the controller transmits a second request frame to the first AP, wherein the second request frame is configured to request an AP ID assignment for the first AP. The first AP replies to the controller with a first response frame, wherein the first response frame is configured to accept, agree to, confirm, reject, or negatively acknowledge the AP ID assignment by the controller for the first AP.

In some embodiments, the master AP transmits a second request frame to the first AP, wherein the second request frame carries an AP ID assigned by the mater AP to the first AP. The first AP replies to the master AP with a second response frame, wherein the second response frame is configured to accept, agree to, confirm, reject, or negatively acknowledge the AP ID assigned by the master AP to the first AP.

In some embodiments, the master AP transmits a second request frame to the first AP, wherein the second request frame is configured to request an AP ID assignment for the first AP. The first AP replies to the master AP with a first response frame, wherein the first response frame is configured to accept, agree to, confirm, reject, or negatively acknowledge the AP ID assignment by the master AP for the first AP.

Exemplarily, the VBSS scenario (or multi-AP coordination group scenario) illustrated in FIG. 8 is different from the traditional scenario where one BSS is formed by one AP and its associated STAs, and BSSs formed by different APs act as OBSSs for each other.

In some embodiments, a VBSS may be understood as a virtual BSS formed by multiple APs and their associated STAs, and all of the STAs in the VBSS may be considered to be associated with all of the APs in the whole VBSS. The VBSS has a controller that controls and manages the whole VBSS.

In some embodiments, a VBSS may also be understood as a Multi-AP Group (or called a Multi-AP Coordination Group) formed by multiple APs, which includes a master AP/controller and at least one slave AP. As illustrated in FIG. 16, the group is controlled and managed by the master AP or the controller for all slave APs.

In some embodiments, the controller exists independently from all APs, or the controller is hosted on an AP, or the controller is an AP.

In some embodiments, in a case where each AP is connected to the controller (i.e., the AP 1 in FIG. 8 or the master AP in FIG. 16) via a wired backhaul link, the controller may assign an AP ID to each AP via the wired backhaul link, and transmit the AP IDs corresponding to all of the APs controlled by the controller to all APs in the network, such that any AP in the network controlled by the controller knows the AP IDs of other APs.

In some embodiments, in a case where each AP is connected to the controller (i.e., AP 1 in FIG. 8 or the master AP in FIG. 16) via a wireless backhaul link, the controller may assign an AP ID to each AP when establishing a VBSS/Multi-AP Group. AP 1 where the controller is hosted may first transmit a second request frame to other APs. The second request frame carries an AP ID assigned by the controller to the AP. Then the AP replies with a second response frame indicating acceptance or rejection of the request from the controller. Finally, AP 1 where the controller is hosted transmits a broadcast first confirmation frame, which is configured to indicate the AP ID information of each AP in the VBSS/Multi-AP Group, such that each of the APs in the VBSS/Multi-AP Group knows the AP ID of another, to facilitate the sharing AP that has acquired the TXOP to carry an AP ID of a target AP in the AID12 subfield of the first trigger frame (such as the MU-RTS TXS Trigger frame) when performing TXOP sharing or co-sharing.

Exemplarily, the second request frame includes a VBSS Setup Request frame and/or a Multi-AP Group Setup Request frame. The second response frame includes a VBSS Setup Response frame and/or a Multi-AP Group Setup Response frame. The first confirmation frame is the same as or different from the second response frame. The first confirmation frame includes at least one of: a VBSS Setup Response frame, a Multi-AP Group Setup Response frame, a VBSS Setup Confirm frame, or a Multi-AP Group Setup Confirm frame.

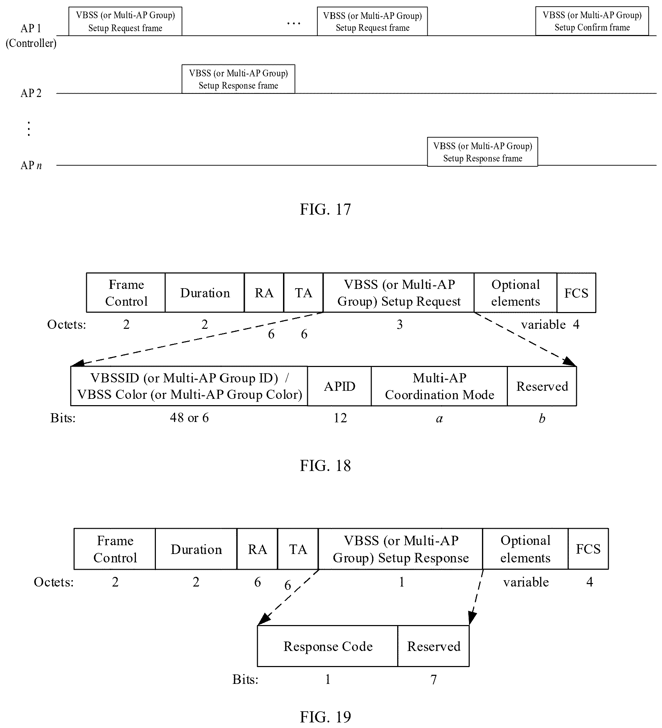

FIG. 17 is a schematic diagram of an AP ID allocation method according to some exemplary embodiments of the present disclosure. Description is given hereinafter by using an example where the method is performed in the VBSS scenario illustrated in FIG. 8 or the multi-AP group scenario illustrated in FIG. 16.

The controller (AP 1) transmits a second request frame to AP 2, wherein the second request frame carries an AP ID assigned by the controller to AP 2. AP 2 replies to the controller with a second response frame, wherein the second response frame is configured to indicate that AP 2 accepts the AP ID assigned by the controller to AP 2, or to indicate that AP 2 rejects the AP ID assigned by the controller to AP 2.

The controller (AP 1) transmits a second request frame to AP n, wherein the second request frame carries an AP ID assigned by the controller to AP n. AP n replies to the controller with a second response frame, wherein the second response frame is configured to indicate that AP n accepts the AP ID assigned by the controller to AP n, or to indicate that AP n rejects the AP ID assigned by the controller to AP n.

Herein, the controller may also be understood as a master AP.

In some embodiments, the second request frame includes a VBSS Setup Request frame and/or a Multi-AP Group Setup Request frame. Exemplarily, the format of the VBSS Setup Request frame and/or the Multi-AP Group Setup Request frame is illustrated in FIG. 18, wherein the number below the field indicates the number of octets or bits of the field.

The VBSS (Multi-AP Group) Setup Request frame carries a VBSS (or Multi-AP Group) Setup Request element/field.

This frame includes a VBSS ID, or Multi-AP Group ID, or VBSS Color, or Multi-AP Group Color field, i.e., a VBSS ID (or Multi-AP Group ID)/VBSS Color (or Multi-AP Group Color) field, which is configured to indicate a VBSS ID with a length of a third number of bits (such as 48 bits) or a VBSS Color with a length of a fourth number of bits (such as 6 bits) assigned to the VBSS, or to indicate a Multi-AP Group ID with a length of a third number of bits (such as 48 bits) or Multi-AP Group Color with a length of a fourth number of bits (such as 6 bits) assigned to the Multi-AP Group. These fields are used to mark a specific VBSS or Multi-AP Group to avoid confusion of identifiers of different APs in different VBSSs or Multi-AP Groups.

A length of an APID subfield is a first number of bits (such as 12 bits, 11 bits, or bits in other quantities). In some embodiments, a value range of the APID subfield includes a range from 2008 to 2044 and/or a range from 2047 to 4094. In some embodiments, the value range of the AP ID subfield does not include a range from 0 to 2007, and/or 2045, and/or 2046, and/or 4095.

A Multi-AP Coordinated Mode subfield represents the multi-AP coordination mode to be supported by the VBSS or Multi-AP Group, and indicates *a* types of multi-AP coordination modes, wherein *a* is an integer greater than or equal to 0. In some embodiments, the multi-AP coordination modes include, but are not limited to, at least one of: C-TDMA, C-OFDMA, C-BF, J-TX, or C-SR, or the like.

In some embodiments, the Multi-AP Coordination Mode subfield indicates *a* types of multi-AP coordination modes in a bitmap format.

A length of reserved bits in the VBSS (or Multi-AP Group) Setup Request element/field is *b* bits. In some embodiments, the sum of the first number of bits, *a,* and *b* is an even number. In some embodiments, the sum of the first number of bits, *a,* and *b* is an integer multiple of 8. In some embodiments, the sum of 6, the first number of bits, *a,* and *b* is an even number. In some embodiments, the sum of 6, the first number of bits, *a,* and *b* is an integer multiple of 8.

In some embodiments, in a case where the VBSS ID/VBSS Color field is designed as a 48-bit VBSS ID field, the sum of 12, *a,* and *b* (i.e., 12+*a*+*b*) is required to be an integer multiple of 8. In a case the VBSS ID/VBSS Color field is designed as a 6-bit VBSS Color field, the sum of 6, 12, *a,* and *b* (i.e., 6+12+*a*+*b*) is required to be an integer multiple of 8.

Optional elements carried in the VBSS (or Multi-AP Group) Setup Request frame may include, but are not limited to, a first element (such as an HT/VHT/HE/EHT/UHR Operation element), which is configured to indicate the information such as the channel configuration information of the AP.

In some embodiments, the second response frame includes a VBSS Setup Response frame and/or a Multi-AP Group Setup Response frame, and the first confirmation frame includes a VBSS Setup Response frame and/or a Multi-AP Group Setup Response frame. Exemplarily, the format of the VBSS Setup Response frame and/or the Multi-AP Group Setup Response frame is illustrated in FIG. 19, and the number below the field indicates the number of octets or bits of the field.

The VBSS (or Multi-AP Group) Setup Response frame carries a VBSS (or Multi-AP Group) Setup Response element/field.

In this field, a Response Code subfield is configured to indicate whether the AP accepts the VBSS setup request from the controller/master AP. For example, in a case where the Response Code subfield is set to a first value (e.g., 0), the AP does not accept the multi-AP coordination request from the controller/master AP. In a case where the Response Code subfield is set to a second value (e.g., 1), the AP accepts the multi-AP coordination request from the controller/master AP.

Optional elements carried in the VBSS (or Multi-AP Group) Setup Response frame may include, but are not limited to, a first element (such as an HT/VHT/HE/EHT/UHR operation Operation), which is configured to indicate the information such as the channel configuration information of the AP. In a case where the Response Code subfield indicates that the AP does not accept the multi-AP coordination request from the controller/master AP, for example, the Response Code subfield is set to 0, Optional elements may not exist (i.e., the first element is not carried in this frame).

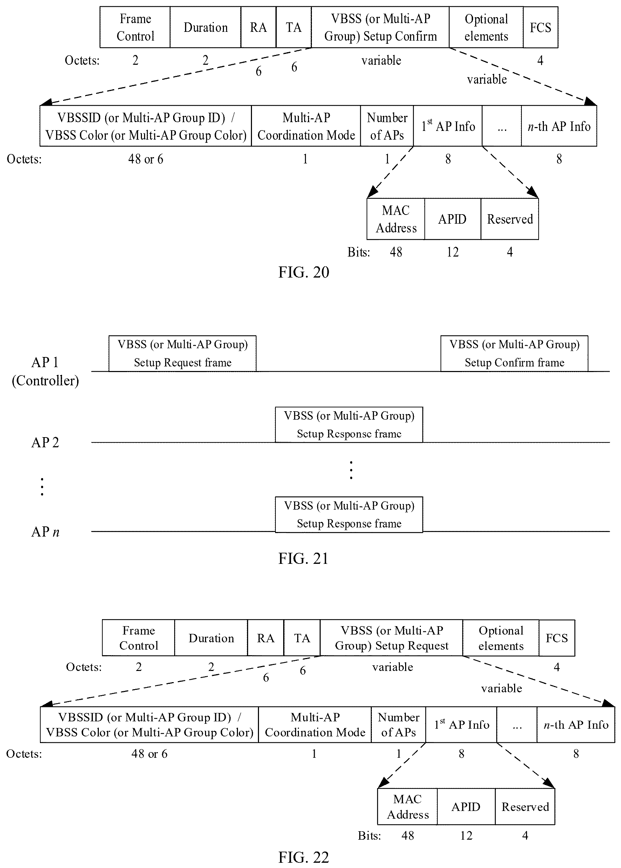

In some embodiments, the first confirmation frame includes a VBSS Setup Confirm frame and/or a Multi-AP Group Setup Confirm frame. Exemplarily, the format of the VBSS Setup Confirm frame and/or the Multi-AP Group Setup Confirm frame is illustrated in FIG. 20, and the number below the field indicates the number of octets or bits of the field. The frame carries at least one of: a Multi-AP Coordination Mode subfield, a Number of APs subfield, a 1^{st} AP Info subfield, ..., an *n*^{th} AP Info subfield, or reserved bit(s).

As illustrated in FIG. 20, the controller indicates the MAC Addresses and AP IDs of the APs in the VBSS (or Multi-AP Group), such that each of the APs that have received the VBSS (or Multi-AP Group) Setup Confirm frame may know the AP ID of another, enabling the sharing AP that has acquired the TXOP to carry an AP ID of a target AP in the AID12 subfield of the first trigger frame (such as the MU-RTS TXS Trigger frame) when sharing the TXOP.

FIG. 21 is a schematic diagram of an AP ID allocation method according to some exemplary embodiments of the present disclosure. Description is given hereinafter by using an example where the method is performed in the VBSS scenario illustrated in FIG. 8 or the multi-AP group scenario illustrated in FIG. 16.

The controller interacts with APs in parallel, wherein the request frame transmitted the controller carries the AP IDs assigned to a plurality of APs.

In some embodiments, the controller (AP1) transmits a second request frame to AP 2, ..., AP n (n is an integer greater than 1) at the same time. The second request frame carries the AP IDs assigned by the controller (AP1) to AP 2, ..., AP n respectively. AP 2 replies to the controller (AP1) with a second response frame 1. The second response frame 1 is configured to indicate that AP 2 accepts the AP ID assigned by the controller (AP 1) to AP 2, or to indicate that AP 2 rejects the AP ID assigned by the controller (AP 1) to AP 2. AP n replies to the controller (AP1) with a second response frame 2. The second response frame 2 is configured to indicate that AP n accepts the AP ID assigned by the controller (AP 1) to AP n, or to indicate that AP n rejects the AP ID assigned by the controller (AP 1) to AP n. The controller (AP1) transmits a first confirmation frame to AP 2, ..., AP n at the same time. The first confirmation frame carries the AP IDs corresponding to AP 2, ..., AP n respectively.

Herein, the controller may also be understood as a master AP.

In some embodiments, the second request frame includes a VBSS Setup Request frame and/or a Multi-AP Group Setup Request frame. Exemplarily, the format of the VBSS Setup Request frame and/or the Multi-AP Group Setup Request frame is illustrated in FIG. 22, wherein the number below the field indicates the number of octets or bits of the field.

The VBSS (Multi-AP Group) Setup Request frame carries a VBSS (or Multi-AP Group) Setup Request element/field

This frame includes a VBSS ID, or Multi-AP Group ID, or VBSS Color, or Multi-AP Group Color field, i.e., a VBSS ID (or Multi-AP Group ID)/VBSS Color (or Multi-AP Group Color) field, which is configured to indicate a VBSS ID with a length of a third number of bits

(such as 48 bits) or a VBSS Color with a length of a fourth number of bits (such as 6 bits) assigned to the VBSS, or to indicate a Multi-AP Group ID with a length of a third number of bits (such as 48 bits) or Multi-AP Group Color with a length of a fourth number of bits (such as 6 bits) assigned to the Multi-AP Group. These fields are used to mark a specific VBSS or Multi-AP Group to avoid confusion of identifiers of different APs in different VBSSs or Multi-AP Groups.

A Multi-AP Coordinated Mode subfield represents the multi-AP coordination mode to be supported by the VBSS or Multi-AP Group, and indicates *a* types of multi-AP coordination modes, wherein *a* is an integer greater than or equal to 0. In some embodiments, the multi-AP coordination modes include, but are not limited to, at least one of: C-TDMA, C-OFDMA, C-BF, J-TX, or C-SR, or the like.

In some embodiments, the Multi-AP Coordination Mode subfield indicates *a* types of multi-AP coordination modes in a bitmap format, wherein *a* is an integer greater than or equal to 0 and less than or equal to 8.

The remaining (8-*a*) bits are reserved bits.

A Number of APs subfield indicates the number of APs for which information is carried in the VBSS (or Multi-AP Group) Setup Request frame, that is, the number of APs corresponding to the subfields 1^{st} AP Info to n^{th} AP Info after the Number of APs subfield. Each AP Info includes a MAC Address subfield and an APID subfield, wherein the MAC Address subfield carries a MAC address of a target AP, and the APID subfield indicates an AP ID assigned by the controller (or master AP) to the target AP. A length of the APID subfield is a first number of bits (such as 12 bits, 11 bits, or bits in other quantities). In some embodiments, a value range of the APID subfield includes a range from 2008 to 2044 and/or a range from 2047 to 4094. In some embodiments, the value range of the APID subfield does not include a range from 0 to 2007, and/or 2045, and/or 2046, and/or 4095. When an AP that has received the VBSS (or Multi-AP Group) Setup Request frame demodulates the MAC Address subfield and the demodulation result indicates that the MAC address carried in the MAC Address subfield is the MAC address of the AP itself, it is defaulted or considered that the AP ID assigned in the AP Info field to which the MAC Address subfield belongs is the AP ID assigned to the AP. That is, the AP that has received the VBSS (or Multi-AP Group) Setup Request frame determines whether the AP ID carried in the AP Info field is its own AP ID based on the MAC address carried in the MAC Address subfield.

Optional elements carried in the VBSS (or Multi-AP Group) Setup Request frame may include, but are not limited to, a first element (such as an HT/VHT/HE/EHT/UHR Operation element), which is configured to indicate information such as channel configuration information of the sharing AP.

In addition, the VBSS (or Multi-AP Group) Setup Request frame may be a trigger frame, which uses a Special User Info field to carry the *n* AP Info fields designed in FIG. 22.

In some embodiments, the second response frame includes a VBSS Setup Response frame and/or a Multi-AP Group Setup Response frame. Exemplarily, the format of the VBSS Setup Response frame and/or the Multi-AP Group Setup Response frame is illustrated in FIG. 19, which may be referred to in the previous description and is not repeated herein.

In some embodiments, since some APs may reject the VBSS (or Multi-AP Group) Setup Request of the controller or master AP, the controller or master AP needs to transmit a first confirmation frame (e.g., a VBSS (or Multi-AP Group) Setup Confirm frame) at the end to confirm the finally determined VBSS (or Multi-AP Group) information, to prevent the sharing AP that has acquired the TXOP from setting the AID12 subfield of the first trigger frame (e.g., the MU-RTS TXS Trigger frame) to indicate an AP that has rejected the VBSS (or Multi-AP Group) Setup Request of the controller or master AP when sharing the TXOP.

In some embodiments, the format of the first confirmation frame is illustrated in FIG. 20, which may be referred to in the previous description and is not repeated herein.

**In step 1530:** a first trigger frame is transmitted.

The first trigger frame is configured to trigger TXOP sharing. In some embodiments, the first trigger frame includes at least one of: a TXOP sharing mode, a shared time-domain resource, a shared frequency-domain resource, information of a sharing party, or information of a shared party.

In some embodiments, the first trigger frame indicates a shared AP by an assigned AP ID.

In some embodiments, the first trigger frame includes an MU-RTS TXS Trigger frame. Transmitting the MU-RTS TXS Trigger frame includes transmitting the MU-RTS TXS Trigger frame and/or receiving the MU-RTS TXS Trigger frame.

The MU-RTS TXS Trigger frame includes an AID12 subfield for indicating an AP ID assigned to an AP.

In some implementations, the MU-RTS TXS Trigger frame includes at least one of: a Receiver Address (RA) field, or a User Info field.

In some embodiments, the RA field of the MU-RTS TXS Trigger frame is set to a broadcast address, and the shared AP(s) is or are indicated by the AID12 subfield of the User info field. The AID12 subfield of the MU-RTS TXS trigger frame indicates an AP ID of an AP. For example, the value of the AID12 subfield is set to be in a range from 2008 to 2044, and/or a range from 2047 to 4094.

In some embodiments, since the RA field of the MU-RTS TXS Trigger frame transmitted by the sharing AP is set to a broadcast address, the shared AP(s) may only be indicated by the AID12 subfield of the User Info field. As it is feasible to assign an APID to each AP within a VBSS (or Multi-AP Group), the present disclosure proposes that the AID12 subfield of the MU-RTS TXS Trigger frame transmitted by the sharing AP indicates the AP ID of the AP (e.g., the value of the AID12 subfield is set to be in a range from 2008 to 2044 and/or a range from 2047 to 4094).

In some embodiments, the first trigger frame is different from a MU-RTS TXS Trigger frame. For example, the first trigger frame is an AP TXS Trigger frame. For example, the Trigger Type subfield of the (HE variant/EHT variant) Common Info field is set to one of the values from 8 to 15, representing that the trigger frame is an AP TXS Trigger frame. The RA field of this frame is allowed to be set to a unicast/multicast address. Therefore, the scheme of assigning an AP ID to an AP as described in step 910 is not required, and the sharing AP may transmit an AP TXS Trigger frame to one or more specific shared APs, to share the acquired TXOP and/or frequency resources to the shared AP for use. Other fields of the AP TXS Trigger frame are consistent with those of the aforementioned MU-RTS TXS Trigger frame.

In some embodiments, the first trigger frame indicates a shared AP by part of bits, all of the bits, or at least one specified bit of the MAC Address field.

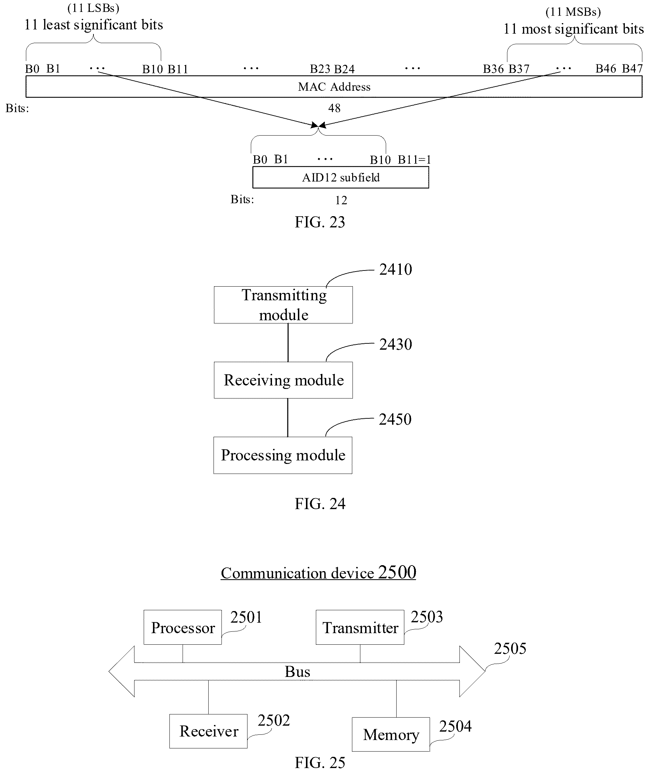

Exemplarily, as illustrated in FIG. 23, for the (HE variant/EHT variant) User Info field of the MU-RTS TXS Trigger frame transmitted by the sharing AP, the most significant bit (1 bit) of the AID12 subfield is set to a third value (e.g., 1). A MAC address of a target shared AP has a length of a third number of bits, e.g., 48 bits. The remaining 11 bits of the AID12 subfield indicate the least significant x bits (e.g., 11 least significant bits (11 LSBs), such as bits B0 to B10), the most significant x bits (e.g., 11 most significant bits (11 MSBs), such as bits B37 to B47), or any x significant bits within the 48 bits (e.g., any 11 bits within bits B11 to B36, but the specific positions of these 11 bits are fixed for all APs) of the MAC address of the target shared AP. Herein, x is a positive integer less than or equal to the third number of bits.

For the (HE variant/EHT variant) User Info field of the MU-RTS TXS Trigger frame, setting the most significant bit (1 bit) of the AID12 subfield to the third value (e.g., 1) allows the value indicated by the AID12 subfield greater than or equal to 2049, avoiding conflicts with 0 to 2046 defined in Table 2, thereby enabling the AID12 subfield to indicate a specific AP.

In addition, in a case where the least significant x bits (e.g., the least significant 11 bits (11 LSBs), such as bits B0 to B10), the highest x significant bits (e.g., 11 most significant bits (11 MSBs), such as bits B37 to B47), or any x significant bits in 48 bits (e.g., any 11 bits in bits B11 to B36), within the MAC Address of an AP, combined with the most significant bit (setting to the third value) of the AID12 subfield, results in the value of the AID12 subfield equaling 4095 (which has been occupied as listed in Table 2), the AP is forced to be mapped to the AID12 subfield = 2047.

**In step 1550,** a time-frequency resource corresponding to a shared AP is determined.

Determining the time-frequency resource corresponding to the shared AP may be understood as determining the time-domain resource and/or frequency-domain resource available to the shared AP, or determining the time-domain resource and/or frequency-domain resource required by the shared AP for use.

In some embodiments, the sharing AP determines the time-frequency resource corresponding to the shared AP, or the shared AP determines the time-frequency resource corresponding to the shared AP, or the controller determines the time-frequency resource corresponding to the shared AP, or the master AP determines the time-frequency resource corresponding to the shared AP.

In some embodiments, the whole VBSS (or Multi-AP Group) uses the same channel configuration. Optional elements of the VBSS (or Multi-AP Group) Setup Request frame transmitted by the controller carry a first element (such as an HT/VHT/HE/EHT/UHR Operation element), which is configured to indicate channel configurations adopted by the established VBSS (or Multi-AP Group). All APs belonging to the VBSS (or Multi-AP Group) use the same configurations such as primary channel and operation bandwidth operations and other configurations. In this way, the sharing AP that has acquired the TXOP and the shared AP to be scheduled/shared may not perform RU conversion/transformation, and the frequency resources indicated by the RU Allocation subfield of the MU-RTS TXS Trigger frame transmitted by the sharing AP are the frequency-domain resources shared to the shared AP for direct operation.

In some embodiments, each AP in the VBSS (or Multi-AP Group) uses an independent channel configuration. The channel configuration of the sharing AP that has acquired the TXOP may be different from the channel configuration of the shared AP to be scheduled/shared. Therefore, RU conversion/transformation may be required. In response to receiving the MU-RTS TXS Trigger frame transmitted by the sharing AP, the shared AP needs to perform RU conversion on the RU Allocation subfield in this frame based on the first element (such as the HT/VHT/HE/EHT/UHR Operation element) carried in a management frame, action frame, or control frame transmitted by the sharing AP and received by the shared AP previously, to obtain the frequency-domain resources usable by the shared AP. The management frame includes at least one of: a Beacon frame, a Probe Response frame, an Association Response frame, or a Reassociation Response frame, or the like.

The relevant aspects of the RU conversion may be referred to in the previous step 970 and are not be repeated herein.

It should be understood that in the embodiments of the application, steps 1510 and 1550 are optional, and the order of steps 1510, 1530, and 1550 may be exchanged. In addition, any one step or any two steps among steps 1510, 1530, and 1550 may be implemented as an independent embodiment. For example, step 1510 may be implemented as an independent embodiment, step 1530 may be implemented as an independent embodiment, step 1550 may be implemented as an independent embodiment, the combination of step 1510 and step 1530 may be implemented as an independent embodiment, or the combination of step 1530 and step 1550 may be implemented as an independent embodiment, etc.

In summary, by assigning an AP ID to the AP that does not overlap with the AID of the STA, the present disclosure enables a sharing AP to indicate a specific shared AP by a broadcast first trigger frame (e.g., an MU-RTS TXS Trigger frame), thereby realizing C-TDMA based on the Triggered TXOP Sharing mechanism.

By designing a method for the sharing AP and the shared AP to convert the RU Allocation subfield in the first trigger frame (such as the MU-RTS TXS Trigger frame) transmitted by the sharing AP into frequency-domain resources usable by the shared AP based on their respective first elements (such as HT/VHT/HE/EHT/UHR Operation elements), the problem of possible RU indication mismatch between the sharing AP and the shared AP is solved.

FIG. 24 is a structural block diagram of an apparatus for transmitting information according to some exemplary embodiments of the present disclosure. The apparatus includes at least a portion of the following transmitting module 2410, receiving module 2430, and processing module 2450.

The transmitting module 2410 is configured to perform all or part of the steps related to transmitting described above.

The receiving module 2430 is configured to perform all or part of the steps related to receiving described above.

The processing module 2450 is configured to perform all or part of the steps related to processing, conversion, transformation, and determination described above.
(1) The apparatus for transmitting information may be implemented as the aforementioned first wireless device or as a portion of the aforementioned first wireless device.

In some embodiments, the transmitting module 2410 is configured to transmit a first frame, wherein the first frame is configured to trigger TXOP sharing.

In some embodiments, the first frame carries identification information of a second wireless device, and the second wireless device includes a wireless device with which a TXOP is shared.

In some embodiments, the identification information of the second wireless device includes at least one of an AP ID, a MAC address, part of bits of the MAC address, all of bits of the MAC address, or at least one specified bit of the MAC address.

In some embodiments, the AP ID is assigned by the apparatus for transmitting information, or by a controller, or by a master AP.

In some embodiments, the processing module 2450 is configured to determine a time-frequency resource for the second wireless device.

In some embodiments, the time-frequency resource includes at least one of: a time-domain resource corresponding to the shared TXOP, or a frequency-domain resource corresponding to the shared TXOP.

In some embodiments, the time-frequency resource for the second wireless device is determined based on at least one of: channel configuration information of the apparatus, channel configuration information of the second wireless device, or resource unit allocation information.

In some embodiments, the resource unit allocation information is carried in the first frame.

In some embodiments, the first frame is a trigger frame.

In some embodiments, the receiving module 2430 is configured to receive a frame from the second wireless device.

In some embodiments, the processing module 2450 is configured to determine an AP ID of the second wireless device.

In some embodiments, the AP ID is transmitted in a second frame.

In some embodiments, the receiving module 2430 is configured to receive a third frame, wherein the third frame is configured to respond to the AP ID.

In some embodiments, the processing module 2450 is configured to determine a time-frequency resource corresponding to a second wireless device.

In some embodiments, the processing module 2450 is configured to determine a time-frequency resource corresponding to the second wireless device and to the shared TXOP.

In some embodiments, the time-frequency resource corresponding to the second wireless device is determined based on at least one of: channel configuration information of the apparatus, channel configuration information of the second wireless device, or resource unit allocation information.

(2) The apparatus for transmitting information may be implemented as the aforementioned second wireless device or as a portion of the aforementioned second wireless device.

In some embodiments, the receiving module 2430 is configured to receive a first frame, wherein the first frame is configured to trigger TXOP sharing.

In some embodiments, the first frame carries identification information of the apparatus for transmitting information, and the apparatus includes a wireless device with which TXOP is shared.

In some embodiments, the identification information of the apparatus for transmitting information includes at least one of an AP ID, a MAC address, part of bits of the MAC address, all of the bits of the MAC address, or at least one specified bit of the MAC address.

In some embodiments, the AP ID is assigned by a first wireless device, or by a controller, or by a master AP.

In some embodiments, the processing module 2450 is configured to determine a time-frequency resource of the apparatus for transmitting information.

In some embodiments, the time-frequency resource includes at least one of: a time-domain resource corresponding to the shared TXOP, or a frequency-domain resource corresponding to the shared TXOP.

In some embodiments, the time-frequency resource of the apparatus for transmitting information is determined based on at least one of: channel configuration information of the first wireless device, channel configuration information of the apparatus, or resource unit allocation information.

In some embodiments, the resource unit allocation information is carried in the first frame.

In some embodiments, the first frame is a trigger frame.

In some embodiments, the processing module 2450 is configured to determine an AP ID of the apparatus for transmitting information.

In some embodiments, the AP ID is carried in a second frame.

In some embodiments, the transmitting module 2410 is configured to transmit a third frame, wherein the third frame is configured to respond to the AP ID.

In some embodiments, the processing module 2450 is configured to determine a time-frequency resource corresponding to the apparatus for transmitting information.

In some embodiments, the processing module 2450 is configured to determine a time-frequency resource corresponding to the apparatus for transmitting information and the shared TXOP.

In some embodiments, the time-frequency resource corresponding to the apparatus for transmitting information is determined based on at least one of: channel configuration information of the first wireless device, channel configuration information of the apparatus, or resource unit allocation information.

In summary, by assigning an AP ID to the AP that does not overlap with the AID of the STA, the apparatus enables a sharing AP to indicate a specific shared AP by a broadcast first trigger frame (e.g., an MU-RTS TXS Trigger frame), thereby realizing C-TDMA based on the triggered TXOP sharing mechanism.

By designing a method for the sharing AP and the shared AP to convert the RU Allocation subfield in the first trigger frame (such as the MU-RTS TXS Trigger frame) transmitted by the sharing AP into frequency-domain resources usable by the shared AP based on their respective first elements (such as HT/VHT/HE/EHT/UHR Operation elements), the problem of possible RU indication mismatch between the sharing AP and the shared AP is solved.

It should be noted that, the apparatus provided in the foregoing embodiments is only illustrated by way of example with the division of each of the above-described functional modules, and in actual application, the above-described functions may be assigned to be accomplished by different functional modules according to the needs, i.e., the internal structure of the device may be divided into different functional modules in order to accomplish all or part of the above-described functions.

With respect to the apparatus in this embodiment, the specific manner in which each module performs an operation has been described in detail in the embodiments of related methods, and is not described in detail herein.

FIG. 25 is a schematic structural diagram of a communication device (AP or STA) according to some exemplary embodiments of the present disclosure. The communication device 2500 includes: a processor 2501, a receiver 2502, a transmitter 2503, a memory 2504, and a bus 2505.

The processor 2501 includes one or more processing cores, and the processor 2501 executes various functional applications and information processing by running software programs and modules. In some embodiments, the processor 2501 may be used to implement the functions of the processing module 2450.

The receiver 2502 and the transmitter 2503 may be implemented as a communication component, which may be a communication chip. In some embodiments, the receiver 2502 may be used to implement the functions of the receiving module 2430. In some embodiments, the transmitter 2503 may be used to implement the functions of the transmitting module 2410.

The memory 2504 is connected to the processor 2501 via the bus 2505. The memory 2504 may be used to store at least one instruction, and the processor 2501 is configured to execute the at least one instruction to perform each step in the method embodiments.

In addition, the memory 2504 may be implemented by any type of volatile or non-volatile storage device or a combination thereof. The volatile or non-volatile storage device includes but is not limited to: a magnetic disk, an optical disk, an electrically erasable programmable read-only memory (EEPROM), an erasable programmable read-only memory (EPROM), a static random-access memory (SRAM), a read-only memory (ROM), a magnetic memory, a flash memory, or a programmable read-only memory (PROM).

In some embodiments, the receiver 2502 independently receives signals/data, or the processor 2501 controls the receiver 2502 to receive signals/data, or the processor 2501 requests the receiver 2502 to receive signals/data, or the processor 2501 cooperates with the receiver 2502 to receive signals/data.

In some embodiments, the transmitter 2503 independently transmits signals/data, or the processor 2501 controls the transmitter 2503 to transmit signals/data, or the processor 2501 requests the transmitter 2503 to transmit signals/data, or the processor 2501 cooperates with the transmitter 2503 to transmit signals/data.

Some exemplary embodiments of the present disclosure further provide a computer-readable storage medium. The computer-readable storage medium stores one or more programs therein. The one or more programs, when loaded and run by a processor, cause the processor to perform the multi-link data transmission method according to the method embodiments.

Some exemplary embodiments of the present disclosure further provide a chip. The chip includes programmable logic circuitry and/or one or more program instructions. The chip, when running on a communication device, is configured to perform the multi-link data transmission method according to the method embodiments.

In some embodiments, the chip includes at least some modules of: the transmitting module 2410, the receiving module 2430, and the processing module 2450. For related content, reference may be made to the above description, which is not described herein any further.

Some exemplary embodiments of the present disclosure further provide a computer program product. The computer program product, when running on a processor of a computer device, causes the computer device to perform the multi-link data transmission method.

Some exemplary embodiments of the present disclosure further provide a computer program. The computer program includes one or more computer instructions. The one or more computer instructions, when loaded and executed by a processor of a computer device, cause the computer program to perform the multi-link data transmission method.

Those skilled in the art should be able to realize that, in the above one or more examples, the functions described in the embodiments of the present disclosure may be implemented by hardware, software, firmware, or any combination thereof. When implemented by software, the functions may be stored in a computer-readable medium or transmitted as one or more instructions or codes on the computer-readable medium. The computer-readable medium includes a computer storage medium and a communication medium, wherein the communication medium includes any medium that facilitates transfer of a computer program from one place to another. The storage medium may be any available medium that is accessible by a general-purpose or special-purpose computer.

The above description provides only optional embodiments of the present disclosure which are not intended to limit the present disclosure. Any modification, equivalent substitution, improvement, etc. made within the spirit and principle of the present disclosure shall be included in the protection scope of the present disclosure.

## Claims

1. A method for transmitting information, performed by a first wireless device, the method comprising:
transmitting a first frame, wherein the first frame is configured to trigger transmission opportunity, TXOP, sharing.

2. The method according to claim 1, wherein the first frame carries identification information of a second wireless device, the second wireless device comprising a wireless device with which a TXOP is shared.

3. The method according to claim 2, wherein the identification information of the second wireless device comprises at least one of: an access point, AP, identity, ID, a medium access control, MAC, address, part of bits of the MAC address, all of the bits of the MAC address, or at least one specified bit of the MAC address.

4. The method according to claim 3, wherein the AP ID is assigned by the first wireless device, or by a controller, or by a master AP.

5. The method according to any one of claims 1 to 4, further comprising:
determining a time-frequency resource for the second wireless device.

6. The method according to claim 5, wherein the time-frequency resource comprises at least one of: a time-domain resource corresponding to a shared TXOP, or a frequency-domain resource corresponding to the shared TXOP.

7. The method according to claim 5 or 6, wherein the time-frequency resource for the second wireless device is determined based on at least one of: channel configuration information of the first wireless device, channel configuration information of the second wireless device, or resource unit allocation information.

8. The method according to claim 7, wherein the resource unit allocation information is carried in the first frame.

9. The method according to any one of claims 1 to 8, wherein the first frame is a trigger frame.

10. A method for transmitting information, performed by a second wireless device, the method comprising:
receiving a first frame, wherein the first frame is configured to trigger transmission opportunity, TXOP, sharing.

11. The method according to claim 10, wherein the first frame carries identification information of the second wireless device, and the second wireless device comprises a wireless device with which a TXOP is shared.

12. The method according to claim 11, wherein the identification information of the second wireless device comprises at least one of: an access point, AP, identity, ID, a medium access control, MAC, address, part of bits of the MAC address, all of the bits of the MAC address, or at least one specified bit of the MAC address.

13. The method according to claim 12, wherein the AP ID is assigned by a first wireless device, or by a controller, or by a master AP.

14. The method according to any one of claims 10 to 13, further comprising:
determining a time-frequency resource for the second wireless device.

15. The method according to claim 14, wherein the time-frequency resource comprises at least one of: a time-domain resource corresponding to a shared TXOP, or a frequency-domain resource corresponding to the shared TXOP.

16. The method according to claim 14 or 15, wherein the time-frequency resource for the second wireless device is determined based on at least one of: channel configuration information of a first wireless device, channel configuration information of the second wireless device, or resource unit allocation information.

17. The method according to claim 16, wherein the resource unit allocation information is carried in the first frame.

18. The method according to any one of claims 10 to 17, wherein the first frame is a trigger frame.

19. A method for transmitting information, performed by a first wireless device, the method comprising:
determining an access point, AP, identity, ID, of a second wireless device.

20. The method according to claim 19, wherein the AP ID is transmitted in a second frame.

21. The method according to claim 19 or 20, further comprising:
receiving a third frame, wherein the third frame is configured to respond to the AP ID.

22. A method for transmitting information, performed by a second wireless device, the method comprising:
determining an access point, AP, identity, ID, of the second wireless device.

23. The method according to claim 22, wherein the AP ID is carried in a second frame.

24. The method according to claim 22 or 23, further comprising:
transmitting a third frame, wherein the third frame is configured to respond to the AP ID.

25. A method for transmitting information, performed by a first wireless device, the method comprising:
determining a time-frequency resource corresponding to a second wireless device.

26. The method according to claim 25, wherein determining the time-frequency resource corresponding to the second wireless device comprises:
determining a time-frequency resource corresponding to the second wireless device and to a shared TXOP.

27. The method according to claim 25 or 26, wherein the time-frequency resource corresponding to the second wireless device is determined based on at least one of: channel configuration information of the first wireless device, channel configuration information of the second wireless device, or resource unit allocation information.

28. A method for transmitting information, performed by a second wireless device, the method comprising:
determining a time-frequency resource corresponding to the second wireless device.

29. The method according to claim 28, wherein determining the time-frequency resource corresponding to the second wireless device comprises:
determining a time-frequency resource corresponding to the second wireless device and to a shared transmission opportunity, TXOP.

30. The method according to claim 28 or 29, wherein the time-frequency resource corresponding to the second wireless device is determined based on at least one of: channel configuration information of a first wireless device, channel configuration information of the second wireless device, or resource unit allocation information.

31. An apparatus for transmitting information, comprising:
a first transmitting module, configured to transmit a first frame, wherein the first frame is configured to trigger transmission opportunity, TXOP, sharing.

32. An apparatus for transmitting information, comprising:
a first receiving module, configured to receive a first frame, wherein the first frame is configured to trigger transmission opportunity, TXOP, sharing.

33. An apparatus for transmitting information, comprising:
a first processing module, configured to determine an access point, AP, identity, ID, of a second wireless device.

34. An apparatus for transmitting information, comprising:
a second processing module, configured to determine an access point, AP, identity, ID, of a second wireless device.

35. An apparatus for transmitting information, comprising:
a third processing module, configured to determine a time-frequency resource corresponding to a second wireless device.

36. An apparatus for transmitting information, comprising:
a fourth processing module, configured to determine a time-frequency resource corresponding to a second wireless device.

37. A communication device, comprising:
a processor;
a transceiver connected to the processor; and
a memory for storing one or more instructions executable by the processor;
wherein the processor is configured to load and execute the one or more instruction to perform the method for transmitting information as defined in any one of claims 1 to 30.

38. A computer-readable storage medium, storing one or more executable instructions, wherein the one or more executable instructions, when loaded and executed by a processor, causes the processor to perform the method for transmitting information as defined in any one of claims 1 to 30.

39. A chip, comprising programmable logic circuitry or one or more programs, wherein the chip is configured to perform the method for transmitting information as defined in any one of claims 1 to 30.

40. A computer program product, comprising one or more computer instructions stored in a computer-readable storage medium, wherein the one or more computer instructions, when read from the computer-readable storage medium and executed by a processor of a computer device, cause the computer device to perform the method for transmitting information as defined in any one of claims 1 to 30.

41. A computer program, comprising one or more computer instructions, wherein the one or more computer instructions, when loaded and executed by a processor of a computer device, cause the computer device to perform the method for transmitting information as defined in any one of claims 1 to 30.
